# EUROPEAN PATENT APPLICATION

(11) **EP 4 026 738 A1**
(43) Date of publication of application: **13.07.2022**
(21) Application number: 20859785.6
(22) Date of filing: 27.08.2020
(51) Int. Cl.: B60S 5/06

(54) **BATTERY DISASSEMBLY MECHANISM AND BATTERY DISASSEMBLY METHOD FOR AGV**

(30) Priority: 06.09.2019 CN 201910844074
(71) Applicant: Hangzhou Hikrobot Technology Co., Ltd., Hangzhou, Zhejiang 310051 (CN)
(72) Inventor: HUANG, Juming, Hangzhou, Zhejiang 310051 (CN); BAI, Han, Hangzhou, Zhejiang 310051 (CN)
(74) Representative: BRP Renaud & Partner mbB Rechtsanwälte Patentanwälte Steuerberater
(86) International application number: PCT/CN2020/111718
(87) International publication number: WO 2021/043055

(57) **Abstract**

The present disclosure provides a battery removal/installation mechanism and a battery removal method for an AGV.The mechanism includes an abutting table, a coarse positioning module, a fine positioning module and an unlocking module, wherein the coarse positioning module, the fine positioning module and the unlocking module are all arranged on the abutting table. The abutting table is provided with an abutting surface, and the coarse positioning module includes a coarse positioning column that protrudes from the abutting surface. The fine positioning module comprises a fine positioning power unit and a fine positioning column. The unlocking module includes an unlocking power unit and an unlocking ejector rod, the locking module can be unlocked when the unlocking ejector rod protrudes from the abutting surface. The method including the following steps: positioning the battery module of the AGV in a horizontal direction; unlocking the locking module on the battery module of the AGV by the unlocking module; moving the battery module and the AGV away from each other vertically, so that the battery module is separated from the AGV from below the AGV.

## Description

The present application claims the priority to a Chinese patent application No. 201910844074.6 filed with the China National Intellectual Property Administration on September 6, 2019 and entitled "Battery Removal/installation Mechanism and Battery Removal Method for AGV", which is incorporated herein by reference in its entirety.

### Technical field

The present invention relates to the technical field of logistics and transportation, and in particular to a battery removal/installation mechanism and a battery removal method for an AGV.

### Background

With the development of society, the logistics system is becoming more and more automatic and intelligent. In the current logistics sorting and transportation operations, a large number of AGVs (abbreviation of Automatic Guided Vehicle) are needed. AGV is a transport vehicle that can travel along a specified guiding path, with safety protection and various transfer functions.

AGV usually uses its own battery to provide power, and the battery needs to be replenished in time when its power is about to be exhausted, so the system needs to be equipped with equipment to automatically supply power to the AGV.

In the related art, there are already some devices for replacing the battery module of the AGV. It is an urgent problem to be solved as to how to position the battery module and the battery replacement device quickly and accurately to improve the efficiency of replacing the battery module.

### Summary

To solve the above problems, embodiments of the present disclosure provide a battery removal/installation mechanism and a battery removal method for an AGV.

The embodiments of the present disclosure adopt the following technical solutions.

In a first aspect, an embodiment of the present disclosure provides a battery removal/installation mechanism for an AGV, including an abutting table, a coarse positioning module, a fine positioning module and an unlocking module, wherein the coarse positioning module, the fine positioning module and the unlocking module are all arranged on the abutting table,
the abutting table is provided with an abutting surface, the coarse positioning module includes a coarse positioning column corresponding to a position of a coarse positioning hole on a battery module of the AGV, and the coarse positioning column protrudes from the abutting surface, and can extend into the coarse positioning hole when the abutting surface abuts against the battery module of the AGV;
the fine positioning module includes a fine positioning power unit and a fine positioning column corresponding to a position of a fine positioning hole on the battery module of the AGV, wherein the fine positioning column can be driven by the fine positioning power unit to protrude from the abutting surface or retract below the abutting surface, and can extend into the fine positioning hole when the fine positioning column protrudes from the abutting surface, and a width of an annular gap formed by the fine positioning column and the fine positioning hole is smaller than that formed by the coarse positioning column and the coarse positioning hole;
the unlocking module includes an unlocking power unit and an unlocking ejector rod corresponding to a position of a locking module on the battery module of the AGV, the unlocking ejector rod can be driven by the unlocking power unit to protrude from the abutting surface or retract below the abutting surface, and can unlock the locking module when the unlocking ejector rod protrudes from the abutting surface.

In some embodiments, the above-mentioned battery removal/installation mechanism for an AGV includes a plurality of coarse positioning modules, which are distributed along one diagonal line of the battery module of the AGV;
and/or
the above-mentioned battery removal/installation mechanism for an AGV includes a plurality of fine positioning modules, which are distributed along the other diagonal line of the battery module of the AGV.

In some embodiments, in the above-mentioned battery removal/installation mechanism for an AGV, the abutting table is further provided with a ball unit, which is protrudingly arranged on the abutting surface.

In some embodiments, in the above-mentioned battery removal/installation mechanism for an AGV, the battery removal/installation mechanism further includes a battery module detection sensor, which is arranged on the abutting table and configured for detecting whether there exists a battery module of the AGV on the abutting table.

In some embodiments, in the above-mentioned battery removal/installation mechanism for an AGV, the battery removal/installation mechanism further includes a pulling module, which includes a pulling hook protruding from the abutting surface and a pulling hook power unit for driving the pulling hook to rotate and hooking the battery module of the AGV.

In some embodiments, in the above-mentioned battery removal/installation mechanism for an AGV, the battery removal/installation mechanism further includes elastic jacking modules, and the number of abutting tables, the number of unlocking modules and the number of elastic jacking modules are the same as the number of locking modules on the battery module of the AGV, each of the abutting tables is provided with one of the unlocking modules and each of the abutting tables is supported by a different elastic jacking module of the elastic jacking modules respectively.

In some embodiments, in the above-mentioned battery removal/installation mechanism for an AGV, the battery removal/installation mechanism further includes a jacking sensor for detecting whether at least one of the abutting tables is pressed to a predetermined position.

In some embodiments, in the above-mentioned battery removal/installation mechanism for an AGV, the battery removal/installation mechanism further includes a walking module, which is connected with the abutting table and configured to drive the abutting table to move horizontally to a position below the battery module of the AGV.

In some embodiments, in the above-mentioned battery removal/installation mechanism for an AGV, the battery removal/installation mechanism includes a plurality of walking modules, each of which drives a part of the abutting table to move horizontally.

In some embodiments, in the above-mentioned battery removal/installation mechanism for an AGV, the battery removal/installation mechanism includes two walking modules which move relative to each other.

In a second aspect, an embodiment of the present disclosure provides a battery removal method for an AGV, including following steps:
positioning a battery module of the AGV in a horizontal direction;
unlocking a locking module on the battery module of the AGV by an unlocking module;
moving the battery module and the AGV away from each other in a vertical direction so that the battery module is separated from the AGV from below the AGV.

In some embodiments, in the above-mentioned battery removal method for an AGV, the step of positioning the battery module of the AGV in the horizontal direction includes:
roughly positioning the battery module of the AGV in the horizontal direction;
precisely positioning the battery module of the AGV in the horizontal direction.

In some embodiments, in the above-mentioned battery removal method for an AGV,
the step of roughly positioning the battery module of the AGV in the horizontal direction includes: moving a coarse positioning column to extend into a coarse positioning hole of the battery module from below to roughly position the battery module of the AGV in the horizontal direction;
the step of precisely positioning the battery module of the AGV in the horizontal direction includes: moving a fine positioning column to extend into a fine positioning hole of the battery module from below to accurately position the battery module of the AGV in the horizontal direction;
a width of an annular gap formed by the fine positioning column and the fine positioning hole is smaller than that formed by the coarse positioning column and the coarse positioning hole.

In some embodiments, in the above-mentioned battery removal method for an AGV,
the step of moving the coarse positioning column to extend into the coarse positioning hole of the battery module from below to roughly position the battery module of the AGV in the horizontal direction includes:
in a process that the battery module moves relative to and approaches an abutting surface of an abutting table located below it in a vertical direction, moving the coarse positioning column to extend into the coarse positioning hole of the battery module from below, roughly positioning the battery module of the AGV in the horizontal direction, wherein the battery module abuts against the abutting surface when the rough positioning in the horizontal direction is completed;
the step of moving the fine positioning column to extend into the fine positioning hole of the battery module from below to accurately position the battery module of the AGV in the horizontal direction includes:
   moving the fine positioning column from below the abutting surface to protrude from the abutting surface and extend into the fine positioning hole of the battery module to accurately position the battery module of the AGV in the horizontal direction.

In some embodiments, in the above-mentioned battery removal method for an AGV, in the process that the battery module moves relative to and approaches the abutting surface of the abutting table located below it in the vertical direction, the battery module will press the abutting table downward and elastically deform an elastic jacking module connected with the abutting table, and stop a relative movement between the battery module and the abutting table after detecting that the abutting table is pressed to a predetermined position.

In some embodiments, in the above-mentioned battery removal method for an AGV, in the process that the battery module moves relative to and approaches the abutting surface of the abutting table located below it in the vertical direction, the battery module moves towards the abutting surface of the abutting table located below it.

In some embodiments, in the above-mentioned battery removal method for an AGV, the step of moving the battery module and the AGV away from each other in the vertical direction so that the battery module is separated from the AGV from below the AGV includes:
moving the AGV upward in the vertical direction away from the abutting table, so that the battery module stays on the abutting table and separates from the AGV.

In some embodiments, in the above-mentioned battery removal method for an AGV, the step of moving the battery module and the AGV away from each other in the vertical direction so that the battery module is separated from the AGV from below the AGV includes:
moving the abutting table and the AGV away from each other in the vertical direction, and detecting whether there is a battery module on the abutting table; stopping removing the battery module when it is detected that there is a battery module on the abutting table; and performing following steps when it is detected that there is no battery module on the abutting table:
moving the battery module along the vertical direction relative to the abutting surface of the abutting table located below it and abutting them against each other again;
hooking the battery module by a pulling hook;
moving the abutting table and the AGV away from each other in the vertical direction again.

In some embodiments, in the above-mentioned battery removal method for an AGV, the step of unlocking the locking module on the battery module of the AGV by the unlocking module includes:
unlocking the locking module in a process that an unlocking ejector rod of the unlocking module moves from below the abutting surface to protrude from the abutting surface.

The above-mentioned at least one technical solution adopted in the embodiments of the present disclosure can achieve the following beneficial effects.

The battery removal/installation mechanism and the battery removal method for an AGV disclosed in the embodiments of the present disclosure can quickly and accurately remove the battery module.

### Brief Description of the Drawings

The drawings illustrated here are used to provide a further understanding of the present disclosure and constitute a part of the present disclosure, the exemplary embodiments of the present disclosure and their descriptions are used to explain the present disclosure and do not constitute an improper limitation on the present disclosure. In the drawings:
Fig. 1 is an overall structural view of a battery replacement station disclosed in an embodiment of the present disclosure.
Fig. 2 is a perspective structural view of a battery replacement device disclosed in an embodiment of the present disclosure.
Fig. 3 is a front structural view of a battery replacement device disclosed in an embodiment of the present disclosure.
Fig. 4 is a diagram showing the specific structure of an AGV disclosed in an embodiment of the present disclosure.
Fig. 5 is a specific structural view of a battery module disclosed in an embodiment of the present disclosure.
Fig. 6 is a structural view illustrating the bottom of a battery module disclosed in an embodiment of the present disclosure.
Fig. 7 is a cross-sectional view illustrating the cooperation between a lock catch and a locking module and an unlocking ejector rod disclosed in the embodiment of the present disclosure.
Fig. 8 is a structural view illustrating the cooperation of the lifting rack, the mainframe and the subframe disclosed in the embodiment of the present disclosure.
Fig. 9 is a specific structural view of the lifting rack disclosed in the embodiment of the present disclosure.
Fig. 10 is a top structural view of a supporting table and a positioning mechanism disclosed in the embodiment of the present disclosure.
Fig. 11 is a specific structural view of a first positioning module disclosed in the embodiment of the present disclosure.
Fig. 12 is a specific structural view of a second positioning module disclosed in the embodiment of the present disclosure.
Fig. 13 is a specific structural view of a battery removal/installation mechanism and a slope disclosed in the embodiment of the present disclosure.
Fig. 14 is a specific structural view of the battery removal/installation mechanism disclosed in the embodiment of the present disclosure.
Fig. 15 is an overall structural view of a battery compartment system disclosed in the embodiment of the present disclosure.
Fig. 16 is a specific structural view of a battery pick-and-place device disclosed in an embodiment of the present disclosure.
Fig. 17 is a top structural view of the battery pick-and-place device disclosed in the embodiment of the present disclosure.
Fig. 18 is a specific structural view of a charging device disclosed in an embodiment of the present disclosure.
Fig. 19 is a specific structural view of the charging base disclosed in the embodiment of the present disclosure.
Fig. 20 is a schematic diagram of a firefighting device disclosed in an embodiment of the present disclosure.
Fig. 21 is a structural view illustrating the cooperation of a battery module receiving mechanism and a detector disclosed in the embodiment of the present disclosure.
Fig. 22 is a flowchart of a battery replacement method for an AGV disclosed in the embodiment of the present disclosure.
Fig. 23 is a flowchart of a battery removal method for an AGV disclosed in the embodiment of the present disclosure.
Fig. 24 is a flowchart of a positioning method for an AGV disclosed in an embodiment of the present disclosure.

### Reference Numbers:

1- battery replacement device, 10- lifting rack, 100- supporting table, 1000-supporting surface, 1000a- receiving cavity, 1001- avoidance area, 1002- opening, 101- positioning mechanism, 1010- first positioning module, 1010a- positioning slider, 1010b- guiding rail, 1010c- positioning groove, 1010d- guiding slope, 1010e- reset elastic member, 1010f- wheel detection sensor, 1011- second positioning module, 1011a- horizontal pushing assembly, 1011a1- fixed bracket, 1011a2- moving bracket, 1011a3- horizontal pushing power unit, 1011a4- pushing guide unit, 1011a5- flexible clamping block, 1012- reference mark, 102- subframe press-down mechanism, 1020-press-down power unit, 1021- press-down element, 103- subframe lifting mechanism, 104- mainframe press-down mechanism, 1040- press-down power unit, 1041-press-down element, 105- supporting frame, 1050- main body part, 1051- extension part, 106- pre-charging mechanism, 1060- pre-charging electrical connector, 1061-pre-charging power unit, 11- lifting-rack lifting mechanism, 12- battery removal/installation mechanism, 120- abutting table, 1200- abutting surface, 1201-ball unit, 121-coarse positioning module, 1210- coarse positioning column, 122- fine positioning module, 1220- fine positioning column, 1221- fine positioning power unit, 123- unlocking module, 1230- unlocking ejector rod, 1231- unlocking power unit, 124- battery module detection sensor, 125- pulling module, 1250- pulling hook, 1251-pulling hook power unit, 126- elastic jacking module, 127- jacking sensor, 128-walking module, 129- base body and 13- slope;
2- battery compartment system, 20- battery pick-and-place device, 200- bearing table, 2000- battery module fixing element, 2001- limiting mechanism, 2001a-limiting element, 2001b- limiting power unit, 201- transfer mechanism, 2010-telescopic module, 2011- rotating module, 202- battery lifting mechanism, 203-battery replacement port, 204- battery storage port, 205- fire exhaust port, 206- fixing rack, 207- main supporting rack, 2070- lifting channel, 21- storage device, 210-charging base bracket, 211- charging base, 2110- charging table, 2110a- receiving surface, 2111- charging base coarse positioning module, 2111a- charging base coarse positioning column, 2112- charging base fine positioning module, 2112a-charging base fine positioning column, 2113- connector module, 2113a- connector, 2114-charging base ball unit, 2115- charging base battery module detection sensor, 2116- supporting rack, 2117- mounting table, 2118- integrated power unit;
3- firefighting device, 30- battery module receiving mechanism, 300- telescopic supporting module, 3000- fixing part, 3001- supporting part, 3002- telescopic power unit, 3003- guiding rail, 31- firefighting box, 32- firefighting material containing box, 320- discharge port, 33- discharge valve, 34- firefighting bracket, 35- detector;
9- AGV, 90- mainframe, 91- subframe, 910- lock catch, 9100- unlocking ejector rod, 9101- U-shaped lock, 9102- lock body, 92- pin hole, 93- battery module, 930-locking module and 931- positioning hole;
a- a first horizontal direction, b- a second horizontal direction.

### Detailed Description

In order to make the purpose, technical solutions and advantages of the present disclosure clearer, the technical solutions of the present disclosure will be described clearly and completely below with reference to specific embodiments of the present disclosure and corresponding drawings. Obviously, the described embodiments are only part of the embodiments of the present disclosure, not all of them. Based on the embodiments in the present disclosure, all other embodiments obtained by those ordinary skills in the art without creative efforts shall fall within the protection scope of the present disclosure.

The technical solutions provided by the embodiments of the present disclosure will be described in detail below with reference to the drawings.

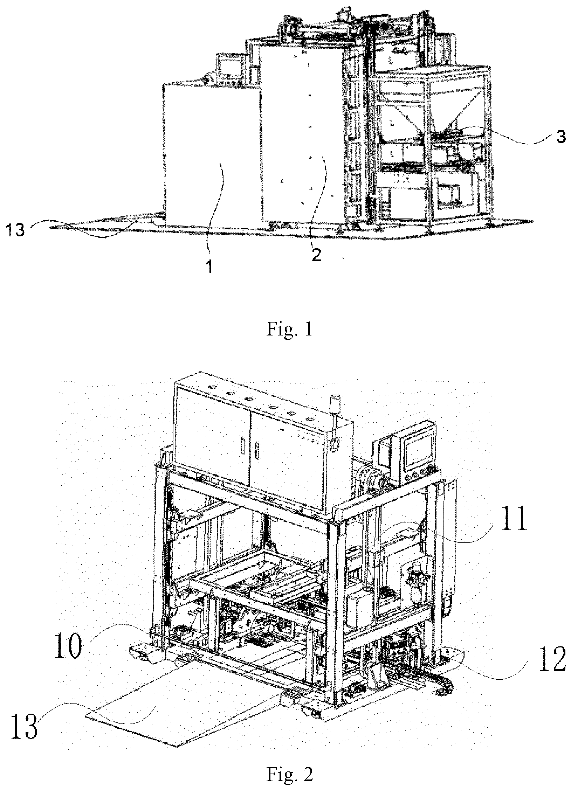

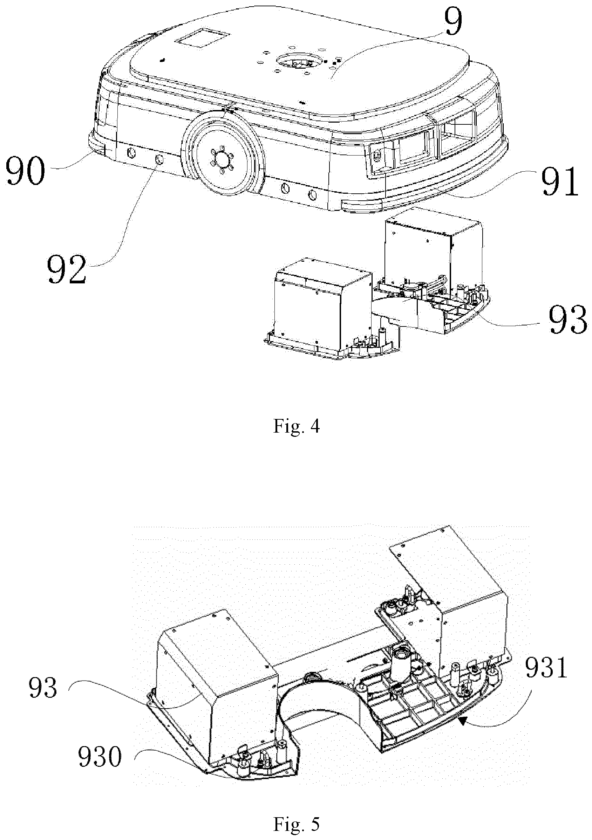

An embodiment of the present disclosure provides a battery replacement station suitable for AGV, Fig. 1 shows a two-wheel drive AGV structure suitable for the battery replacement station of the present disclosure, and all the embodiments of the present disclosure are described by taking the AGV as an example. However, it should be stated that the AGV 9 described in the present disclosure is not limited to the two-wheel drive AGV shown in Fig. 4, but also can be a four-wheel drive AGV or a bionic walking AGV, which can walk and stop in the form of automatic navigation and can unload and load a battery module 93 from the bottom of the AGV 9. The AGV 9 shown in Fig. 4 includes a mainframe 90 and a subframe 91. In the embodiment shown in Fig. 4, the mainframe 90 and the subframe 91 are arranged at the front and back sides along the traveling direction of the AGV 9, alternatively, the subframe 91 may be set as a structure that is fixedly connected with the mainframe 90 of the AGV 9 in the vertical direction and can be connected with the outside, and the posture of the main body of the AGV 9 can be changed by applying external forces to the mainframe 90 and the subframe 91.

The battery module 93 described in the present disclosure, which is installed in the subframe 91, may be a nickel-hydrogen rechargeable battery, a lithium battery or a non-rechargeable battery. Further, it is not limited to the shape shown in Fig. 4 as long as it can be unloaded and loaded from the bottom of the subframe 91 of the AGV 9 in cooperation with the battery replacement station described in the present disclosure. Of course, in some other embodiments, it is not excluded that the battery module 93 is installed to the mainframe 90. The relevant structure of the battery replacement station is introduced in this embodiment by taking the installation in the subframe 91 only as an example. In other embodiments of the present disclosure, the battery module 93 may also be installed in the mainframe 90 or even other positions.

As shown in Fig. 1, the battery replacement station in this embodiment includes a battery replacement device 1 and a battery compartment system 2. In the embodiment shown in Fig. 1, the battery replacement device 1 and the battery compartment system 2 are used together. During the specific implementation, the battery replacement device 1 and the battery compartment system 2 may be used independently.

First, the battery replacement device 1 will be described in detail below.

The battery replacement device 1 of this embodiment is configured to remove the battery module 93 from the AGV 9 and install the battery module 93 onto the AGV 9.

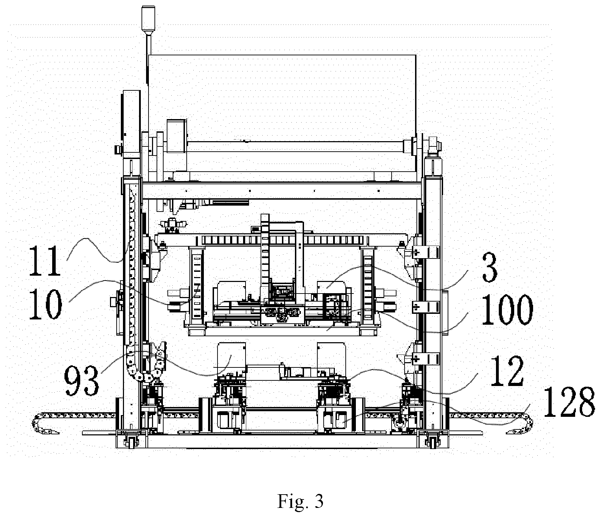

In order to be able to replace the battery from the bottom of the AGV 9, in this embodiment, the battery replacement device 1 includes a lifting rack 10, a lifting-rack lifting mechanism 11, and a battery removal/installation mechanism 12. During the specific use process, the lifting rack 10 and the lifting-rack lifting mechanism 11 may be connected with each other as shown in Fig. 3. The lifting-rack lifting mechanism 11 may be set in the type of a frame, so that the lifting rack 10 can be raised and lowered inside.

Under the cooperation of the lifting rack 10, the lifting-rack lifting mechanism 11 and the battery removal/installation mechanism 12, the battery removal/installation mechanism 12 can be placed below the AGV 9 or removed from the lower part of the AGV 9. The battery removal/installation mechanism 12 can dock with an old battery module on AGV 9, release the connection between the old battery module and the AGV 9, separate the old battery module from the battery module assembly area of the AGV 9, and move the new battery module relative to the AGV 9 to place the new battery module in the battery module assembly area and establish a connection between the new battery module and the AGV 9, thereby realizing the removal and installation of battery module 93.

The lifting rack 10 includes a supporting table 100. After the AGV 9 travels onto the supporting table 100, the lifting-rack lifting mechanism 11 can raise the lifting rack 10 and then the AGV 9. The battery removal/installation mechanism 12 can be located below the lifting rack 10 after it is raised, so that the lifting-rack lifting mechanism 11 can adjust the vertical distance between the bottom of the AGV 9 and the battery removal/installation mechanism 12 to remove and install the battery module 93 from the bottom. The lifting-rack lifting mechanism 11 may also be configured as a structure such as a jack supporting the lifting rack 10, which can be raised and lowered as required. Normally, the supporting table 100 of the lifting rack 10 cannot be tightly contacted with the ground, so a slope 13 can be provided in front of the lifting rack 10 to facilitate the AGV 9 to drive on the supporting table 100.

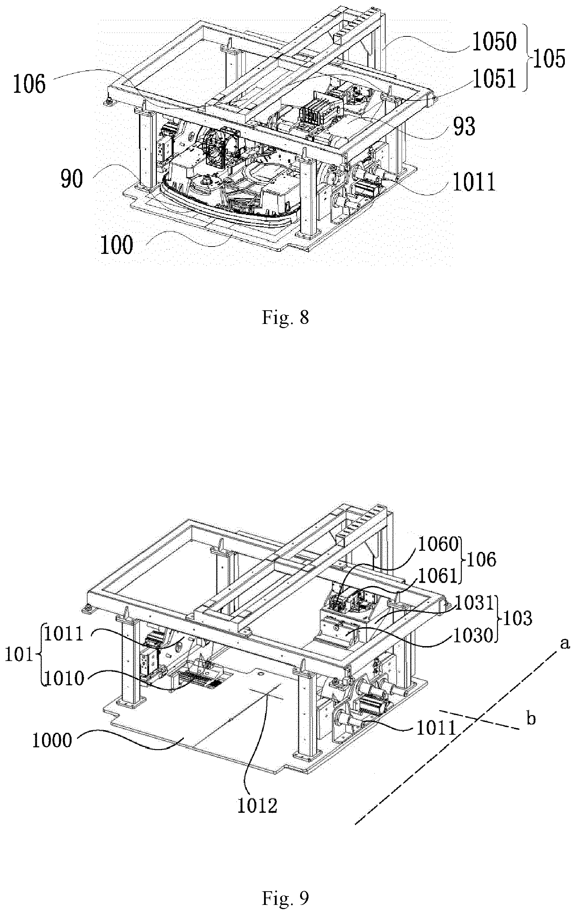

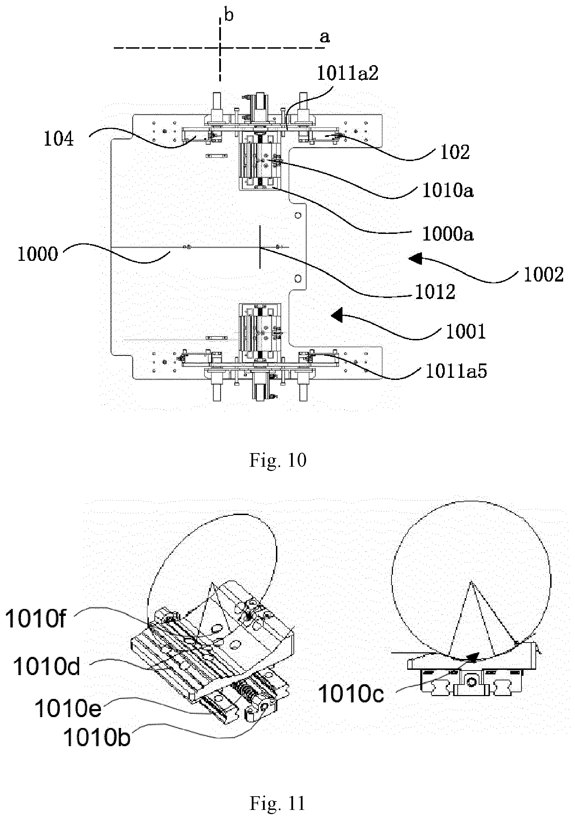

Each part of the lifting rack 10 will be described separately below. As shown in Figs. 9 and 10, the lifting rack 10 includes a first positioning module 1010, a second positioning module 1011, a subframe press-down mechanism 102, a subframe lifting mechanism 103 and a mainframe press-down mechanism 104, etc. In practical applications, each part of the lifting rack 10 can be used independently or in any combination according to different process requirements, which is not limited to using all or part of the above technical solutions shown in this embodiment, as long as the battery module 93 can be removed from the AGV 9 smoothly. Each part of the lifting rack 10 has different functions, and some parts may have other additional functions after being used in combination. Each part of the lifting rack 10 will be described separately below.

First of all, when removing or installing the battery module 93, the matching accuracy of various devices is extremely important, if the matching accuracy is too low, the relative positions of the devices will be greatly deviated, resulting in the devices being unable to complete the setting action.

In this embodiment, in order to facilitate the battery removal/installation mechanism 12 to remove and install the battery module 93 smoothly, the lifting rack 10 includes a positioning mechanism 101. The positioning mechanism 101 can determine the relative posture and the relative position between the AGV 9 and the lifting rack 10, mainly between the AGV 9 and the supporting table 100. Specifically, since the AGV 9 can be parked directly on the supporting table 100, the vertical positions of the AGV 9 and the supporting table 100 can be ignored. As shown in Fig. 9, the positioning mechanism 101 usually only needs to consider the parking position of the AGV 9 in the horizontal plane. The positioning mechanism 101 may realize the positioning of the AGV 9 by positioning the AGV 9 in a first horizontal direction a perpendicular to the wheel axis and in a second horizontal direction b along the wheel axis.

In order to position the AGV 9 in the first horizontal direction a perpendicular to the wheel axis, as shown in Fig. 9, the positioning mechanism 101 may include a first positioning module 1010 for positioning the AGV 9 in the first horizontal direction a perpendicular to the wheel axis by positioning the wheels of the AGV 9. Further, in order to position the AGV 9 in the second horizontal direction b along the wheel axis, the positioning mechanism 101 may include a second positioning module 1011 for positioning the AGV 9 in the second horizontal direction b along the wheel axis. In this way, by the positioning function of the first positioning module 1010 and the second positioning module 1011, the position of the AGV 9 in the horizontal direction can be fixed, which facilitates the battery removal/installation mechanism 12 to position, remove and install the battery module 93.

Specifically, in this embodiment, as shown in Figs. 10 and 11, the first positioning module 1010 can include a positioning slider 1010a and a guiding rail 1010b. In order to position the AGV 9 in the first horizontal direction a, the positioning slider 1010a is provided with a positioning groove 1010c extending along the second horizontal direction b, and the positioning groove 1010c can be set in a V shape as shown in Fig. 11, in this way, the wheels of the AGV 9 can be automatically stuck in the V-shaped positioning groove 1010c. Of course, it may also be considered to set the positioning groove 1010c to be a rectangular, an inverted trapezoidal, a semi-circular or other shapes that just accommodate the wheels of the AGV 9, as long as the wheels of the AGV 9 can sink down into the positioning groove 1010c and be fixed by it when passing through the positioning groove 1010c. In this way, by positioning the wheels of the AGV 9, the positioning of the AGV 9 in the first horizontal direction a can be realized.

A supporting surface 1000 is provided on the upper surface of the supporting table 100, the supporting surface 1000 can be provided as a complete planar surface as shown in Fig. 10, or as a grid-like surface, as long as it can support the AGV 9 and allow the AGV 9 to run on it. In order to make the wheels of the AGV 9 sink into the positioning groove 1010c and be positioned smoothly, in this embodiment, a supporting surface 1000 is provided with a receiving cavity 1000a which is formed by recessing downward from the supporting surface 1000, and the receiving cavity 1000a can receive the first positioning module 1010, so that most structure of the first positioning module 1010 can be located below the supporting surface 1000, so that the positioning groove 1010c and the supporting surface 1000 can be substantially flush with each other, and the wheels of the AGV 9 can easily travel from the supporting surface 1000 to the positioning groove 1010c of the positioning slider 1010a.

The positioning slider 1010a is also provided with a guiding slope 1010d, as shown in Fig. 11, one side of the guiding slope 1010d is flush with the supporting surface 1000, and the other side of the guiding slope 1010d is flush with one side of the positioning groove 1010c, that is, adjacent to one side of the positioning groove 1010c, so that the wheels of the AGV 9 can be easily guided from the supporting surface 1000 into the positioning groove 1010c by the guiding slope 1010d.

The positioning mechanism 101 needs to position the AGV 9 in both the first horizontal direction a and the second horizontal direction b, so after the AGV 9 is positioned in the first horizontal direction a by the first positioning module 1010, it is necessary to adjust the position of the AGV 9 in the second horizontal direction when the AGV 9 is positioned in the second horizontal direction b by the second positioning module 1011, and the wheels will also move in this direction when adjusting the position of the AGV 9.

In order to ensure that the AGV 9 maintains the position in the first horizontal direction a when positioning in the second horizontal direction b, and also to reduce the difficulty of of the AGV 9 moving along the second horizontal direction b, as shown in Figs. 10 and 11, in this embodiment, the positioning groove 1010c and the guiding rail 1010b both extend along the second horizontal direction b, and the positioning slider 1010a is slidably matched with the guiding rail at the same time, so that the positioning slider 1010a can slide along the second horizontal direction b. In this way, when the AGV 9 moves along the second horizontal direction b, the positioning slider 1010a can move along the second horizontal direction b along with the AGV 9 under the guidance of the guiding rail 1010b, which not only enables the AGV 9 to move along the second horizontal direction b more conveniently, but also ensures that the position of the AGV 9 in the first horizontal direction a does not change.

The first positioning module 1010 may further include a reset elastic member 1010e, which is connected with the positioning slider 1010a. The reset elastic member 1010e is adjusted so that the positioning slider 1010a can be stably maintained in a reset position. When the positioning slider 1010a is in the reset position, the reset elastic member 1010e is in a state of force balance. When the positioning slider 1010a slides from the reset position to other positions along the second horizontal direction, the reset elastic member 1010e will be compressed, extended or otherwise elastically deformed and store the elastic potential energy. When the external force disappears, the elastic potential energy of the reset elastic member 1010e will release and enable the positioning slider 1010a to automatically return to the reset position along the second horizontal direction b. When the first AGV 9 leaves the lifting rack 10, the positioning slider 1010a can automatically return to the initial position to prepare for the next AGV 9 and position it. The reset elastic member 1010e can be a spring, an elastic piece, a rubber band with high elasticity, etc., which has elasticity and can elastically push the positioning slider 1010a to the reset position. In this embodiment, as shown in Fig. 10, the reset position is usually designed in the middle of the receiving cavity 1000a, leaving a certain gap between the positioning slider 1010a and both sides of the receiving cavity 1000a for movement. One reset elastic member 1010e can be respectively arranged on both sides of the positioning slider 1010a to make the movement of the positioning slider 1010a more stable.

The first positioning module 1010 may further include a wheel detection sensor 1010f, which may be arranged on the positioning slider 1010a for detecting whether a AGV wheel exists in the positioning groove 1010c. The wheel detection sensor 1010f may be embedded in the upward side of the positioning slider 1010a as shown in Fig. 11, or may be protrusively arranged at one side of the positioning slider 1010a. The wheel detection sensor 1010f can be set as a photoelectric sensor, or a pressure sensor, etc., as long as it can sense whether the wheels of the AGV 9 reach the positioning groove 1010c, which will not be described here again.

With the above arrangement, the AGV 9 can automatically travel to the supporting table 100, and make the two wheels drive into the positioning slider 1010a of the first positioning module 1010 to automatically position the wheels of the AGV 9 and position the AGV 9 in the first horizontal direction a, at this time, the wheel detection sensor 1010f detects the wheels synchronously and notifies a central control mechanism such as a central processor that the AGV 9 has reached the battery replacement device 1. The central processor issues an instruction to the second positioning module 1011 to continue positioning the AGV 9 in the second horizontal direction b.

In this embodiment, the second positioning module 1011 is configured to position the AGV 9 in the second horizontal direction b, the second positioning module 1011 includes horizontal pushing assemblies 1011a. The horizontal pushing assemblies 1011a are symmetrically arranged on both sides of the supporting table 100 along the second horizontal direction b, and are positioned in the second horizontal direction b by pushing the AGV 9 along the second horizontal direction b.

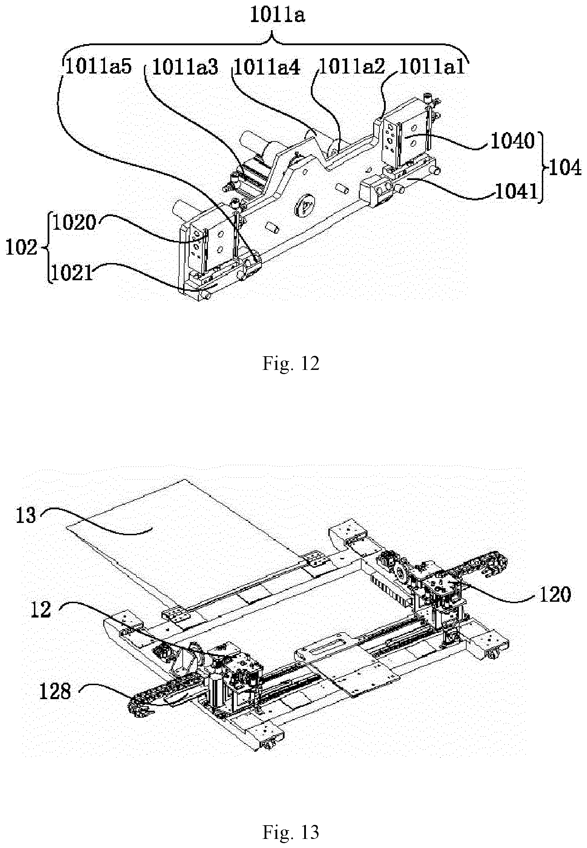

In this embodiment, the second positioning module 1011 is configured to position the AGV 9 in the second horizontal direction b along the wheel axis, and the position of the AGV 9 in the first horizontal direction a is always kept unchanged during the positioning process of the AGV 9 along the second horizontal direction b. As shown in Fig. 9 and Fig. 12, when the AGV 9 is positioned in the first horizontal direction a by the first positioning module 1010, the second positioning module 1011 starts to work, and the horizontal pushing assembly 1011a projects along the second horizontal direction b and abuts against the side of the AGV 9 which, when seen from above, is equivalent to that the horizontal pushing assembly 1011a clamps the AGV 9, so that the AGV 9 can move with the movement of horizontal pushing assembly 1011a, and thereby realizing the positioning in the second horizontal direction b.

As shown in Fig. 12, in this embodiment, the horizontal pushing assembly 1011a may include a fixed bracket 1011a1, a moving bracket 1011a2, a horizontal pushing power unit 1011a3 and a pushing guide unit 1011a4;

The fixed bracket 1011a1 is fixed with the supporting table 100 and configured for fixing other mechanisms supporting the horizontal pushing assembly 1011a. In the embodiment shown in Fig. 12, the fixed bracket 1011a1 is arranged in a plate shape or can be arranged as a supporting column extending upward, as long as it can play a fixed supporting role. The fixed bracket 1011a1 and the moving bracket 1011a2 are connected by a pushing guide unit 1011a4, in the embodiment shown in Fig. 12, the pushing guide unit 1011a4 can be configured as a guiding rail, a guide rod or a guide column, as long as it can guide the moving bracket 1011a2 along the second horizontal direction b. As shown in Fig. 12, the horizontal pushing power unit 1011a3 can be set as a hydraulic rod, or a mechanical arm, a servo motor, etc., as long as it can push the moving bracket 1011a2 in the second horizontal direction b and push the AGV 9 to the positioning position. Since the moving bracket 1011a2 moves along the second horizontal direction b, when a pair of moving brackets 1011a2 are extended out and push the AGV 9 at the same time, the two sides of the AGV 9 can be applied with uniform forces, thus preventing the AGV 9 from twisting due to uneven forces.

In order to avoid damaging the outer surface of the AGV 9 during the clamping process of the moving bracket 1011a2, a flexible clamping block 1011a5 is provided on the moving bracket 1011a2. As shown in Fig. 12, and the flexible clamping block 1011a5 can be provided as a small block protruding from the side of the moving bracket 1011a2 facing the AGV 9, or it can be provided to cover the side of the moving bracket 1011a2 facing AGV 9, as long as the moving bracket 1011a2 can reduce the stress between the moving bracket 1011a2 and the AGV 9 when pushing the AGV 9 through flexible clamping block 1011a5.

In this embodiment, the positioning data of the second positioning module 1011 can be provided by a camera or other types of recognition devices that can observe the relative position of the AGV 9 and the supporting table 100 in the second horizontal direction b. In this embodiment, as shown in Fig. 10, a reference mark 1012 can be set on the supporting table 100, and the reference mark 1012 can be set in the form of a cross mark, a two-dimensional code and the like on the supporting table 100, and can be recognized by the recognition device on the AGV 9. When the AGV 9 recognizes the reference mark 1012, it can calculate the current position difference between the AGV 9 and the reference mark 1012 in the second horizontal direction b, and notify a central control device such as a central processor, and then the central control device can control the second positioning module 1011 to push the AGV 9 and move it to align with the reference mark 1012 to complete the positioning of the main body of the AGV 9 in the horizontal direction.

After positioning the main body of the AGV 9, it is necessary to fix the AGV 9 to prepare for the next step of removing or installing the battery module 93.

For the AGV 9 shown in Fig. 4, the mainframe 90 and the subframe 91 may be fixedly connected, or may be movably connected by hinges. For the structure in which the mainframe 90 and the subframe 91 are connected by hinges, since the relative rotation between the mainframe 90 and the subframe 91 may occur so that the angle therebetween may change, which, on the one hand, may have a negative impact on the positioning accuracy, on the other hand, may cause the structural force experienced by the AGV 9 to change during the installation or removal of the battery module 93, thus increasing the operation difficulty.

Since the battery module 93 is arranged on the subframe 91, in order to avoid the above-mentioned problems, the lifting rack 10 in this embodiment also includes a subframe press-down mechanism 102 as shown in Fig. 12 and a subframe lifting mechanism 103 as shown in Fig. 9. In this case, the supporting table 100, the subframe press-down mechanism 102 and the subframe lifting mechanism 103 can constitute the subframe fixing assembly of the AGV 9. Wherein, the subframe press-down mechanism 102 is configured to press the subframe 91 of the AGV 9 downward, and the subframe lifting mechanism 103 is configured to lift the subframe 91 of the AGV 9 upward, at least the subframe 91 of the AGV can be fixed firmly by applying forces to the subframe 91 on opposite sides in the vertical direction at the same time.

In this embodiment, as shown in Fig. 12, the subframe press-down mechanism 102 can be arranged on a horizontal pushing assembly. It should be noted that, in some embodiments, the horizontal pushing assembly mentioned here may be other independent horizontal pushing structures different from the horizontal pushing assembly 1011a in the second positioning module 1011. Furthermore, in these embodiments, the positioning mechanism 101 may or may not be included, or in the embodiment including the positioning mechanism 101, the positioning mechanism 101 may or may not include the second positioning module 1011, or in the embodiment including the second positioning module 1011, the second positioning module 1011 may or may not include the horizontal pushing assembly 1011a.

When the lifting rack 10 is provided with the horizontal pushing assembly 1011a belonging to the second positioning module, the subframe press-down mechanism 102 can also be arranged on the horizontal pushing assembly 1011a to simplify the structure. Whether it is an independent horizontal pushing assembly or a horizontal pushing assembly 1011a belonging to the second positioning module, the position of the subframe press-down mechanism 102 needs to correspond to the subframe 91 of the AGV 9. In this embodiment, the specific position of the subframe press-down mechanism 102 can be designed according to the structure of the AGV 9 and the position of the pressure-bearing surface, the subframe press-down mechanism 102 may be arranged in different positions for different AGVs 9, but no matter where the subframe press-down mechanism 102 is arranged, it should be ensured that when the horizontal pushing assembly 1011a pushes the AGV 9 along the second horizontal direction b, it can drive the subframe press-down mechanism 102 to move to a position above a certain pressure-bearing surface of the subframe 91. Then, the subframe press-down mechanism 102 can press the pressure-bearing surface downward.

Of course, the subframe press-down mechanism 102 may also be provided on other structures that can move it to a position above the pressure-bearing surface of the subframe 91.

In order to make the subframe 91 experience uniform downward pressures and avoid uneven forces, the subframe press-down mechanism 102 can be symmetrically arranged on the horizontal pushing assembly 1011a along the second horizontal direction b.

In order to further fix the AGV 9, in this embodiment, the lifting rack 10 may further include a mainframe press-down mechanism 104. As shown in Figs. 9 and 10, the mainframe press-down mechanism 104 and the subframe press-down mechanism 102 are arranged on the horizontal pushing assembly 1011a along the first horizontal direction a, the mainframe press-down mechanism 104 can press down the mainframe 90 of the AGV 9, thereby pressing down the mainframe 90 and the subframe 91 simultaneously to avoid the posture of the AGV 9 unstable due to uneven forces.

In this embodiment, in order to achieve a stable pressing, as shown in Fig. 12, the subframe press-down mechanism 102 includes a press-down power unit 1020 and a press-down element 1021. The press-down element 1021 is connected with the press-down power unit 1020, and is extended along the second horizontal direction. As shown in Fig. 12, the press-down element 1021 is configured as a pin extending along the second direction, and the AGV 9 is correspondingly provided with a pin hole 92 with a pressure-bearing surface. The press-down element 1021 can also be configured as a convex strip extending along the second direction, as long as the AGV 9 is correspondingly provided with a groove with a pressure-bearing surface. The press-down element 1021 can be moved to a position above the pressure-bearing surface of the AGV 9 by the horizontal pushing assembly 1011a, that is, the pin is moved to extend into the pin hole 92. At this time, the press-down element 1021 is pushed by the press-down power unit 1020 to move downward, and then presses the pressure-bearing surface downward, thereby exerting a downward pressing force on the AGV 9. Similarly, the mainframe press-down mechanism 104 can include a press-down power unit 1040 and a press-down element 1041, its structure and working principle are the same as those of the subframe press-down mechanism 102, and will not be described in detail here.

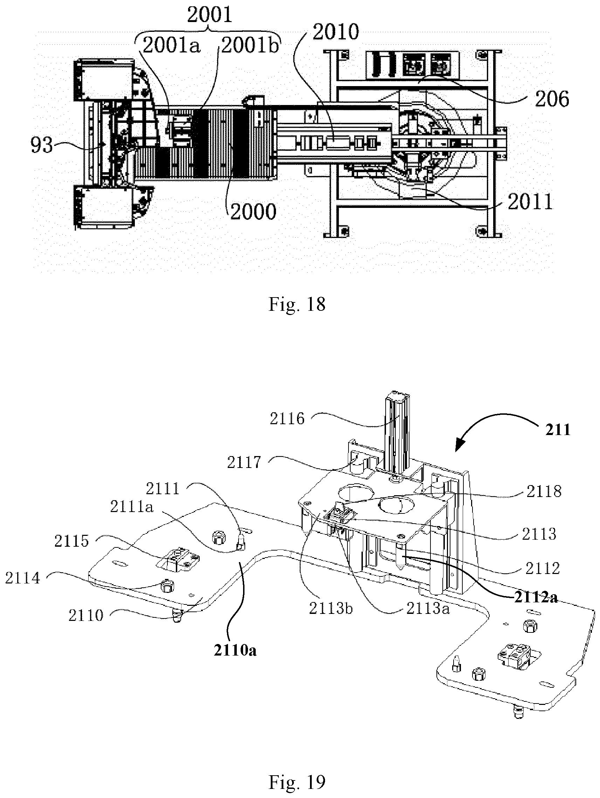

In this embodiment, the subframe lifting mechanism 103 can provide an upward lifting force on the AGV 9 alone or together with the supporting table 100. Especially for some embodiments, in order to enable the battery module 93 to be smoothly detached from the AGV 9 downward, the supporting table 100 will be provided with an avoidance area 1001 for the battery module 93 to pass through in the vertical direction. The avoidance area 1001 may be a closed hollow area on the supporting table 100, or may also be a notch extended to one side of the supporting table 100 and forming an opening 1002. The shape of the avoidance area 1001 shown in Fig. 10 roughly matches with the projection of the battery module 93 shown in Fig. 18 in the vertical direction, or it may be set to not match, as long as the battery module 93 is allowed to pass through it in the vertical direction.

Due to the existence of this avoidance area 1001, the subframe 91 may not be raised by the supporting table 100. In this case, it is more important to set a subframe lifting mechanism 103 to lift the subframe 91 alone.

To fix the subframe lifting mechanism 103, the lifting rack 10 may include a supporting frame 105, which is fixedly connected with the supporting table 100 and is configured to fix the subframe lifting mechanism 103 at the same time. The supporting frame 105 includes a main body part 1050 and an extension part 1051, as shown in Fig. 8, the main body part 1050 is fixedly connected with the supporting table 100, and the extension part 1051 extends from the main body part 1050 to one side of the supporting table 100, the subframe lifting mechanism 103 can be fixed on the extension part 1051, so as to have a larger installation space and a better lifting position.

When the avoidance area 1001 is provided with an opening 1002, the subframe lifting mechanism 103 can be opposite to the opening 1002. When the AGV 9 is in a predetermined position on the supporting table 100, the subframe lifting mechanism 103 can extend toward the opening 1002 and lift the subframe 91.

As shown in Fig. 9, the subframe lifting mechanism 103 includes a lifting member 1030 and a lifting power unit 1031. The lifting power unit 1031 is fixedly connected with the extension part 1051, and the lifting member 1030 is moved to a position below the subframe 91 under the driving of the lifting power unit 1031. When the subframe 91 needs to be raised, the lifting member 1030 can move upward to lift the subframe 91. In the embodiment shown in Fig. 9, the lifting member 1030 is provided with a lifting surface and is matched with the bottom surface of the subframe 91, or it can be provided with a protruding top-connecting part, and lifting the subframe 91 through abutting.

The AGV 9 can be positioned and fixed through the cooperation of the above-mentioned supporting table 100, the positioning mechanism 101, the subframe press-down mechanism 102, the subframe lifting mechanism 103 and the mainframe press-down mechanism 104.

Since the AGV 9 will be in a state without the battery module 93 for a period of time during the replacement process of the battery module 93, the AGV 9 may be completely powered off at this time. However, this situation may bring trouble to the subsequent control of the AGV 9. Therefore, in order to keep the AGV 9 in the on state at all times, as shown in Fig. 9, the lifting rack 10 of this embodiment can further include a pre-charging mechanism 106, which can cooperate with a pre-charging mating device provided on the AGV 9 to precharge the AGV 9 when it is positioned to a predetermined position. The pre-charging mechanism 106 can include a pre-charging electrical connector 1060 for electrically connecting with the pre-charging mating device, the pre-charging electrical connector 1060 may be a charging coil that can cooperate with the pre-charging mating device, or a plug that can be electrically connected with the pre-charging mating device or other structures that can be electrically connected to and charge it, which will not be repeated here. In addition, the pre-charging mechanism 106 also includes a cylinder, a rotating frame or other forms of pre-charging power unit 1061, which can be fixed on the extension part 1051 or other parts of the lifting rack 10, and the pre-charging electrical connector 1060 is driven by the pre-charging power unit 1061. When the AGV 9 is positioned to a predetermined position, its pre-charging mating device is just within the moving path of the pre-charging electrical connector 1060. When the AGV needs to be precharged, the pre-charging power unit 1061 can drive the pre-charging electrical connector 1060 to move and electrically connect with the pre-charging mating device. When it is necessary to cancel the pre-charging state, the pre-charging electrical connector 1060 can be disconnected from the pre-charging mating device by driving the pre-charging power unit 1061 in reverse. With this scheme, the AGV 9 can be prevented from being powered off during the replacement of the battery module 93, and the AGV 9 can be kept on at all times.

After the AGV 9 is positioned and fixed in the lifting rack 10, the central processor can control the lifting rack 10 to drive the AGV 9 to move up and down, so as to adjust the relative position of the AGV 9 and the battery removal/installation mechanism 12.

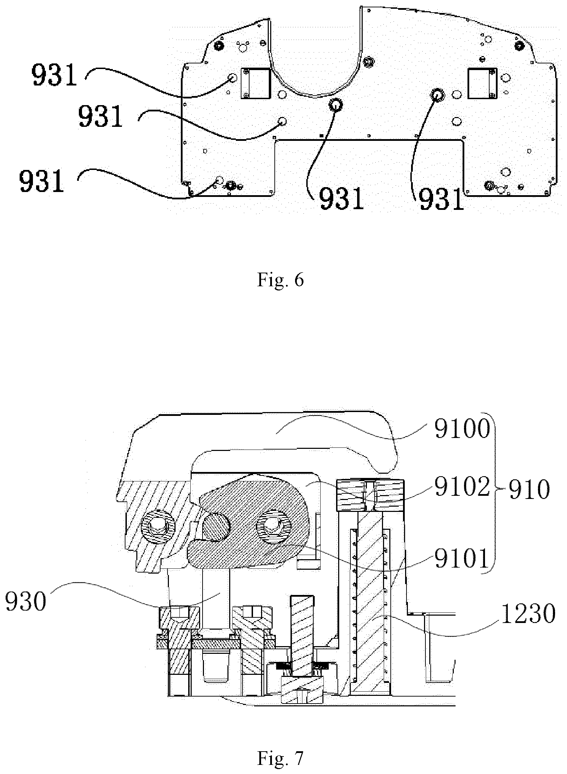

In this embodiment, the battery module 93 has a locking module 930 as shown in Fig. 5. The locking module 930 can be a hanging lock or other structure, at the same time, the subframe 91 is provided with a lock catch 910, which can be set as a quick-hanging structure, as shown in Fig. 7, the lock catch 910 includes an unlocking lever 9100, a U-shaped lock head 9101 and a lock body 9102, both the unlocking lever 9100 and the U-shaped lock head 9101 are rotatably connected with the lock body 9102. When the U-shaped lock head 9101 is in a natural state, its opening faces downward, when the locking module 930 is moved upward to extend into the opening of the U-shaped lock head 9101, the U-shaped lock head 9101 can be driven by the locking module 930 to rotate to face towards the horizontal direction and be lapped and fixed with the unlocking lever 9100 to realize the locking of the locking module 930. After that, the unlocking lever 9100 is pushed upward by an external force to make the unlocking lever 9100 rotate, so that the lapping fixing structure between the unlocking lever 9100 and the U-shaped lock head 9101 can be collapsed, so that the U-shaped lock head 9101 can resume free rotation, and thus the locking module 930 can be released. Of course, the locking module 930 and the lock catch 910 can also be provided with other structures that can be automatically locked and easily unlocked, such as an unlocking button.

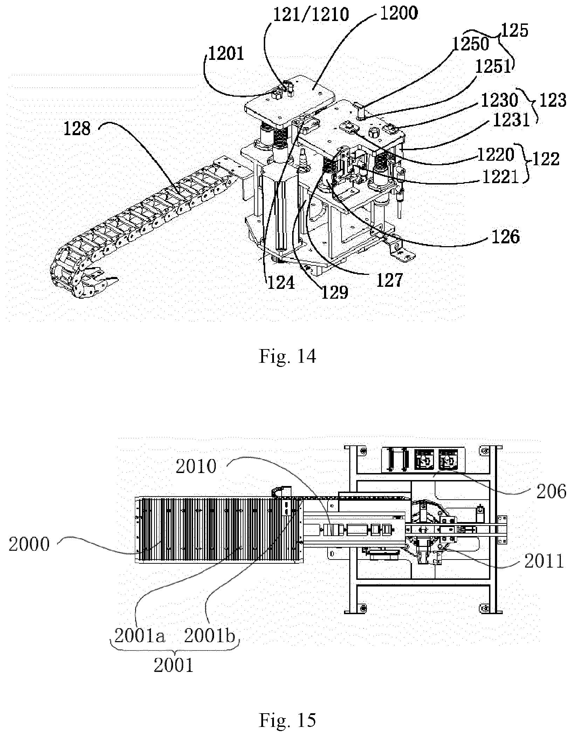

As shown in Figs. 13 and 14, the battery removal/installation mechanism 12 includes an abutting table 120, a coarse positioning module 121, a fine positioning module 122 and an unlocking module 123, as shown in Fig. 6, the battery module 93 is provided with positioning holes 931 corresponding to the coarse positioning module 121 and the fine positioning module 122. The coarse positioning module 121, the fine positioning module 122 and the unlocking module 123 are all arranged on the abutting table 120.

To support the battery module 93, as shown in Fig. 14, the abutting table 120 has an abutting surface 1200, and the coarse positioning module 121 in this embodiment may include coarse positioning columns 1210, which protrude from the abutting surface 1200 and correspond to some positioning holes 931 on the battery module 93. In this embodiment, these positioning holes 931 corresponding to the coarse positioning column 1210 can be called coarse positioning holes. The fine positioning module 122 in this embodiment includes a fine positioning column 1220 and a fine positioning power unit 1221. These fine positioning columns 1220 correspond to other positioning holes 931 on the battery module 93, in this embodiment, these positioning holes 931 corresponding to the fine positioning columns 1220 can be called fine positioning holes. It should be noted that the coarse positioning holes and fine positioning holes in this embodiment are only used to distinguish different corresponding relationships, but there are no restrictions on their structures, shapes and sizes. For example, the shapes and structures of the coarse positioning holes and fine positioning holes can be exactly the same, or the aperture of the coarse positioning hole is smaller than that of the fine positioning hole, etc. Furthermore, other positioning holes 931 in this embodiment can adopt the same or different structures, shapes or sizes without limitation. These fine positioning columns 1220 are usually retracted below the abutting surface 1200, and can protrude from the abutting surface 1200 under the driving of the fine positioning power unit 1221. The fine positioning power unit 1221 can be set as a hydraulic ejector rod or an electric telescopic rod.

When the battery module 93 of the AGV 9 abuts against the abutting surface 1200 under the driving of the lifting rack 10, the coarse positioning column 1210 can first move to extend into the corresponding positioning hole 931, thereby realizing the coarse positioning of the battery removal/installation mechanism 12 and the battery module 93. Compared with the size of the positioning hole 931, the coarse positioning column 1210 is much slimmer, so the annular gap formed between the coarse positioning column 1210 and the positioning hole 931 is wider. The purpose is to enable the coarse positioning column 1210 to smoothly extend into the positioning hole 931 to complete the coarse positioning even when the position difference between these two sides is large.

After the coarse positioning column 1210 is moved to extend into the positioning hole 931, the fine positioning power unit 1221 is turned on to move the fine positioning column 1220 to extend into the corresponding positioning hole 931. As shown in Fig. 14, when compared with the coarse positioning column 1210, the annular gap formed between the fine positioning column 1220 and the positioning hole 931 is much smaller in width and the positioning hole 931 can be substantially filled. Therefore, the fine positioning column 1220 and the positioning hole 931 can be mated very well, when the fine positioning column 1220 is moved to extend into the positioning hole 931 smoothly, the precise positioning of the battery module 93 and the battery removal/installation mechanism 12 can be achieved.

No matter whether it is coarse positioning or fine positioning, there may be a large deviation between the positions of the positioning hole 931 on the battery module 93 and the positions of the coarse positioning column 1210 or the fine positioning column 1220, in order to enable the coarse positioning column 1210 and fine positioning column 1220 move to smoothly extend into the positioning hole 931 even when there is a certain deviation between them and move the battery module 93 to realize the positioning function, the heads of the coarse positioning column 1210 and fine positioning column 1220 or the edge of the positioning hole 931 can be provided with guide surfaces, and the guide surfaces may be an inclined surface or an arc surface.

As described above, during the process of positioning the battery module 93 with the cooperation of the coarse positioning column 1210, the fine positioning column 1220 and the positioning hole 931, the battery module 93 will move, at this time, if there is a relatively large friction force between the abutting table 120 and the battery module 93, the moving effect of the battery module 93 will be affected or even worn out.

In order to avoid the above problems, in this embodiment, as shown in Fig. 14, ball units 1201 are provided which protrude from the surface of the abutting surface 1200. When the battery module 93 is placed on the abutting table 120, the battery module 93 can be in a rolling engagement with the ball unit 1201 to avoid excessive friction and reduce wear.

After the fine positioning of the battery module 93 with respect to the battery removal/installation mechanism 12 is realized by the mutual cooperation of the coarse positioning column 1210, the fine positioning column 1220 and the positioning holes 931, the conditions for unlocking the locking module 930 with the unlocking module 123 are met. The unlocking module 123 in this embodiment can specifically include an unlocking power unit 1231 and an unlocking ejector rod 1230 corresponding to the position of the locking module 930, that is, each locking module 930 has its corresponding unlocking ejector rod 1230 responsible for unlocking, and no omission will occur. The unlocking ejector rod 1230 can protrude from the abutting surface 1200 or retract below the abutting surface 1200 under the drive of the unlocking power unit 1231.

As described above, the lock catch 910 used in this embodiment is provided with an unlocking lever 9100, and the opening of the lock catch 910 can be rotated and the locking module 930 can be released by pushing up the unlocking lever 9100 by an external force, so that the locking module 930 can be unlocked, therefore, in this embodiment, the unlocking ejector rod 1230 actually needs to be aligned with the unlocking lever 9100 on the lock catch 910 matched with each locking module 930 from below.

When the unlocking ejector rod 1230 protrudes from the abutting surface 1200 under the drive of the unlocking power unit 1231, the unlocking ejector rod 1230 can jack the unlocking lever 9100 upward to unlock the locking module 930. When all the locking modules 930 are unlocked, the battery module 93 can be detached from the subframe 91. After that, the lifting rack 10 is raised again, and the AGV 9 will rise together with the lifting rack 10, and the battery module 93 will remain on the battery removal/installation mechanism 12. Of course, in some embodiments, other unlocking structures that can make the unlocking lever 9100 be jacked up can also be used, which will not be described in detail here.

In order to improve the coarse positioning efficiency and coarse positioning accuracy, as shown in Fig. 14, the battery removal/installation mechanism 12 of the embodiment of the present disclosure may include a plurality of coarse positioning modules 121, which are preferably distributed along a diagonal line of the battery module 93, and the farther the distance, the higher the positioning accuracy. At the same time, in order to improve the fine positioning efficiency and fine positioning accuracy, the battery removal/installation mechanism 12 of the embodiment of the present disclosure may also include a plurality of fine positioning modules 122, which are preferably distributed along the other diagonal line of the battery module 93, two settings can be used independently or cooperatively.

In order to improve the automatic control efficiency, the battery removal/installation mechanism 12 may further include a battery module detection sensor 124, which is arranged on the abutting table 120 and configured to detect whether a battery module 93 exists on the abutting table 120. The battery module detection sensor 124 used in this embodiment is a photoelectric sensor, and in other embodiments, a pressure sensor or the like may also be used, as long as it can determine whether the battery module 93 is placed in the battery removal/installation mechanism 12.

In the process of removing the battery module 93, there may be a problem that the battery module 93 is stuck in the subframe 91 and cannot be separated from the subframe 91. Therefore, in this embodiment, as shown in Fig. 14, the battery removal/installation mechanism 12 may further include a pulling module 125, which includes a pulling hook 1250 and a pulling hook power unit 1251, the pulling hook 1250 protrudes from the abutting surface 1200, and can can be driven by the pulling hook power unit 1251 to rotate and hook the battery module 93. In this embodiment, the periphery of the battery module 93 is provided with a circle of protruding edges that can be hooked, and the pulling hook 1250 can rotate and hook these protruding edges, so as to prevent the battery module 93 from rising together when the lifting rack 10 drives the AGV 9 to rise again, thus separating them. In this way, it can be avoided that the battery module 93 is stuck in the subframe 91 and cannot be separated from the subframe 91.

As shown in Fig. 14, due to the large area of the bottom surface of the battery module 93, if it is made of non-durable materials such as plastic, it is easy to deform during use, resulting in that the locking module 930 cannot be unlocked even if part of the unlocking ejector rod 1230 is extended. Therefore, in this embodiment, one abutting table 120 and one unlocking module 123 can be respectively arranged for each locking module 930, meanwhile, in order to adapt to the deformation of the bottom surface of the battery module 93, an elastic jacking module 126 is arranged at the bottom of each abutting table 120.

The lifting rack 10 is configured to drive the AGV 9 to descend to a position where all the abutting tables 120 can be pressed at the same time, at this time, the elastic jacking module 126 can jack up each abutting table 120 to be closely contacted with the battery module 93, so that each unlocking ejector rod 1230 is as close as possible to the corresponding locking module 930. This can effectively avoid the problem that the unlocking ejector rod 1230 can't unlock the locking module 930 due to the deformation of the bottom of the battery module 93. In this embodiment, as shown in Fig. 14, the elastic jacking module 126 can be configured as a spring, or it can be configured as other structures such as an elastic material block, as long as it has elasticity and can jack up the abutting table 120.

In order to further ensure that each abutting table 120 can be jacked up and pressed to a predetermined position, the battery removal/installation mechanism 12 according to this embodiment further includes a jacking sensor 127, which can determine whether at least one abutting table 120 is pressed to a predetermined position, as shown in Fig. 14, the jacking sensor 127 can be set as a pressure sensor or a distance measuring sensor, as long as it can determine the position of the abutting table 120.

In this embodiment, the battery removal/installation mechanism 12 can always be arranged below the lifting rack 10, for example, the initial position of the lifting rack 10 is set in the midair, or a pit is formed under the battery replacement device 1 to accommodate the battery removal/installation mechanism 12. However, the former of these two ways may make it difficult for the AGV 9 to enter the lifting rack 10, while the latter may make it difficult to transport the battery modules 93.

In order to facilitate the AGV 9 to enter the lifting rack 10 and the transportation of the battery module 93, in this embodiment, the initial position of the battery removal/installation mechanism 12 is set at the side of the lifting rack 10. When the relative position of the AGV 9 and the lifting rack 10 is fixed, the lifting rack 10 will rise to give the battery module 93 a space for removal and installation, and in order to make the battery removal/installation mechanism 12 reach the downward side of the AGV 9 from a side. At this time, the battery removal/installation mechanism 12 also includes a walking module 128 which, as shown in Fig. 13, can be set as a caterpillar band, a lead screw, a wheel set or another power structure. The walking module 128 can drive the modules including the abutting table 120, the coarse positioning module 121, the fine positioning module 122, the unlocking module 123 and the elastic jacking module 126 to move horizontally from the initial position to a position below the battery module 93.

In the specific implementation process, a plurality of walking modules 128 can be used according to the actual situations and drive a part of the abutting tables 120 to move respectively, as shown in the embodiment shown in Fig. 13, other modules of the battery removal/installation mechanism 12 can be divided into two parts which are respectively arranged on two sides of the lifting rack 10, and the two parts of modules can be moved to a position below the battery module 93 by using two walking modules 128 respectively.

In this embodiment, each walking module 128 can be equipped with a base body 129, on which the abutting table 120, the coarse positioning module 121, the fine positioning module 122, the unlocking module 123 and the elastic jacking module 126 that the walking module 128 needs to drive can be uniformly arranged, so that the walking module 128 can drive a corresponding part of modules to move by driving the base body 129 matched with it.

When the battery module 93 is removed, the walking module 128 drives the abutting table 120 to reach to a position below the battery module 93, and then the abutting table 120 abuts against the battery module 93 under the cooperation of the elastic jacking module 126 and the lifting rack 10. Through the positioning function of the coarse positioning module 121 and the fine positioning module 122, the unlocking module 123 can be aligned with the locking module 930 on the battery module 93 and complete the unlocking action, at this time, the lifting rack 10 is raised by the lifting-rack lifting mechanism 11, and the battery module 93 is separated from the subframe 91 under the cooperation of its own gravity and the pulling module 125, thus completing the removal of the battery module 93.

When installing the battery module 93, it only needs to be positioned to a position where it can be installed by the positioning function of the coarse positioning module 121, and the AGV 9 approaches the battery module 93 as the lifting rack 10 descends, so that the locking module 930 is moved to extend into the opening of the lock catch 910 provided in the subframe 91 and rotates the opening, automatically locking, and completing the installation of the battery module 93.

The battery module 93 can be removed from or installed to the AGV 9 in certain automatic steps through the cooperation of the battery removal/installation mechanism 12, the lifting rack 10 and the lifting-rack lifting mechanism 11, thus providing a supporting foundation for the automatic battery exchange process of the AGV 9.

Next, the battery compartment system 2 will be introduced in detail.

After the steps of removing and installing the battery module 93 are completed, it is necessary to transfer the depleted battery module 93 to the battery compartment system 2 for storage. Further, the battery compartment system 2 may also charge the battery module 93 while storing the battery module 93, and transfer the charged battery module 93 to the battery removal/installation mechanism 12 to prepare for installation. For this purpose, the battery replacement station also includes the battery compartment system 2.

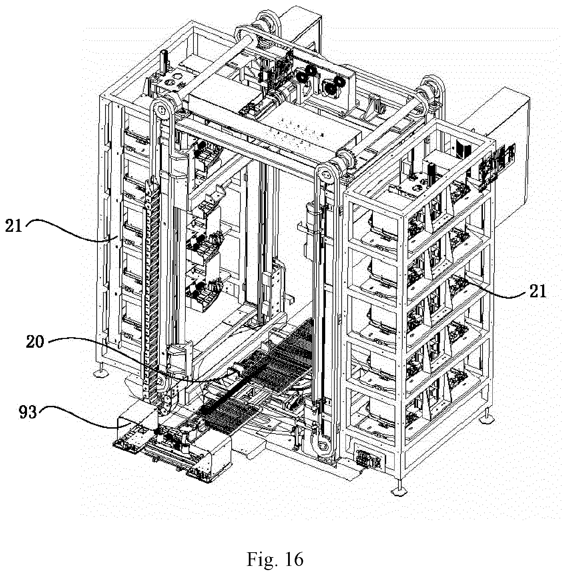

In order to be able to move, store and charge the battery module 93, as shown in Fig. 16, the battery compartment system 2 includes a battery pick-and-place device 20 and a storage device 21, wherein the storage device 21 only has the function of storing the battery module 93 but does not have a charging function, or the storage device 21 can have both the storage and charging functions, the latter will be taken as an example for explaination in this embodiment.

In the embodiment of the present disclosure, the battery pick-and-place device 20 removes the old battery module from the battery removal/installation mechanism 12 and docks the new battery module with the battery removal/installation mechanism 12. For example, the battery pick-and-place device 20 takes out or places the battery module 93 from the battery removal/installation mechanism 12 or the storage device 21 as needed, and transfers the battery module 93 between the battery removal/installation mechanism 12 and the storage device 21. The storage device 21 is provided with a plurality of charging bases 211 inside for storing and charging the battery module 93. Several charging bases 211 may be arranged on the charging base bracket 210.

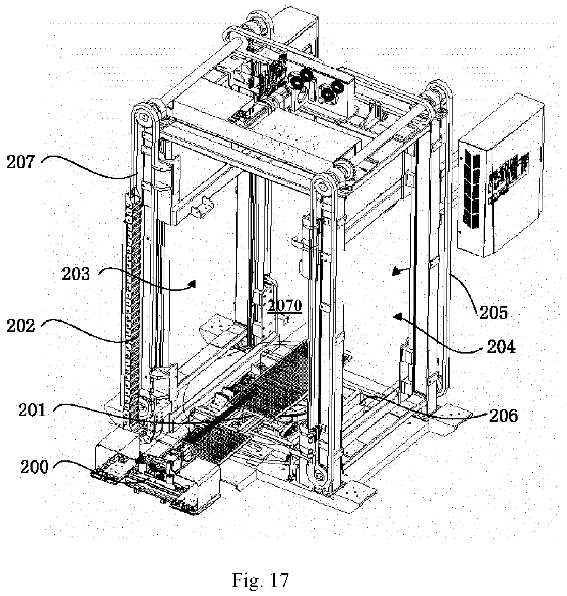

In this embodiment, as shown in Fig. 17, the battery pick-and-place device 20 includes a bearing table 200, a transfer mechanism 201 and a battery lifting mechanism 202. The bearing table 200 can be set as a flat plate as shown in Fig. 17 or as a battery clip, etc., as long as it can carry the battery module 93 and can transfer the battery module 93 between the bearing table 200 and the battery removal/installation mechanism 12 or between the bearing table 200 and the charging base 211 through vertical movement.

The transfer mechanism 201 is connected with the bearing table 200, which can be directly and fixedly connected with each other as shown in Fig. 17, or can be connected with each other through connectors, as long as the transfer mechanism 201 can drive the bearing table 200 to move the battery module 93 to the battery removal/installation mechanism 12 or the storage device 21. The transfer mechanism 201 can move in a horizontal plane or may be a more complicated way.

In this embodiment, the transfer mechanism 201 can be configured to include a telescopic module 2010 and a rotating module 2011 as shown in Fig. 15, and the rotating module 2011 can be configured as a rotating shaft structure as shown in Fig. 15, or can be configured as a circular track, as long as it can drive the bearing table 200 to rotate horizontally and change the horizontal orientation of the bearing table 200. The telescopic module 2010 can be configured as a telescopic arm with rails as shown in Fig. 15, or it can be configured as a hydraulically controlled telescopic arm, as long as it can be telescopic in a straight line in a horizontal plane. In this way, through the cooperation between the rotating module 2011 and the telescopic module 2010, the position and posture of the battery module 93 placed on the bearing table 200 can be changed through rotation and telescopic movement, so as to realize the matching with the battery removal/installation mechanism 12 or the charging base 211 and realize the purpose of transfer.

In order to enable the bearing table 200 to move vertically and complete the transfer operation of the battery module 93 between the bearing table 200 and the battery removal/installation mechanism 12 or between the bearing table 200 and the charging base 211, in this embodiment, the battery lifting mechanism 202 is used to connect with the transfer mechanism 201, the battery lifting mechanism 202 can be configured as a lifting chain as shown in Fig. 17, with which the transfer mechanism 201 is fixedly connected to realize lifting. The battery lifting mechanism 202 can also be provided as a hydraulic rod extending in the vertical direction or other structure with a lifting function.

At first, the bearing table 200 is moved to a position lower than the battery module 93 by the battery lifting mechanism 202, and is then controlled by the transfer mechanism 201 to move horizontally to a position below the battery module 93, at this time, the bearing table 200 can be slightly lower than the abutting table 120 and aligned with the abutting table 120 in different areas of the battery module 93 respectively. Then, the battery lifting mechanism 202 lifts the bearing table 200 upward, and the bearing table 200 holds the battery module 93 from below until the battery module 93 is completely separated from the battery removal/installation mechanism 12, thus completing the transfer of the battery module 93 from the battery removal/installation mechanism 12 to the bearing table 200.

When the fully charged battery module 93 needs to be transferred from the bearing table 200 to the battery removal/installation mechanism 12, only the reverse operation is needed. First, the bearing table 200 carrying the battery module 93 is moved to a position higher than the battery removal/installation mechanism 12, and the abutting table 120 is aligned with the battery module 93, then the battery lifting mechanism 202 is controlled to move downward until the battery module 93 is supported by the abutting table 120 of the battery removal/installation mechanism 12 and completely separated from the bearing table 200, thus completing the transfer process of the battery module 93 from the bearing table 200 to the battery removal/installation mechanism 12.

In order to facilitate the connection of the battery lifting mechanism 202, in this embodiment, the transfer mechanism 201 can be arranged on the fixing rack 206, and then the battery lifting mechanism 202 can be connected with the fixing rack 206.

In order to limit the horizontal movement of the battery module 93 on the bearing table 200 and avoid accidental dropping during the transfer of the battery module 93, in this embodiment, a battery module fixing element 2000 can be arranged on the bearing table 200, as shown in Figs. 15, 5 and 6, the battery module fixing element 2000 can be arranged as an upward fixing pin which can be inserted into some positioning holes 931 of the battery module 93, or can be a clamping plate, a claw or other structure for clamping the battery module 93. Since the positioning holes 931 corresponding to the coarse positioning column 1210 and fine positioning column 1220 will always be occupied before the battery module 93 is removed from the battery removal/installation mechanism 12, the positioning holes 931 corresponding to the fixing pins of the bearing table 200 should be different from those corresponding to the coarse positioning column 1210 and fine positioning column 1220 on the battery removal/installation mechanism 12.

In order to limit the relative vertical movement of the battery module 93 on the bearing table 200, and prevent the battery module 93 from jumping or even accidentally falling off the battery module fixing element 2000 due to the jolt during the transfer process, in this embodiment, a limiting mechanism 2001 can also be provided on the bearing table 200, as shown in Fig. 18, the limiting mechanism 2001 includes a limiting element 2001a that limits the upward movement and separation of the battery module 93 and a limiting power unit 2001b that drives the limiting element 2001a. As shown in Fig. 18, the limiting element 2001a can be configured as a limiting rod, a limiting plate, etc., which can be driven by the limiting power unit 2001b to move to a position above the battery module 93 and restrict the battery module 93, and can prevent the battery module 93 from being vertically separated from the bearing table 200, which will not be repeated here. And the movement mode of the limiting element 2001a can be various modes such as telescopic movement, rotation, translation and the like.

In this embodiment, as shown in Fig. 17, in order to allow the battery module 93 to reach the battery replacement device 1 and the storage compartment or storage device 21 from the battery pick-and-place device 20, the battery pick-and-place device 20 needs to be provided with a battery replacement port 203 and at least one battery storage port 204, both of which can be horizontally passed by the bearing table 200, the battery replacement device 1 faces the battery replacement port 203 and the storage device 21 faces the battery storage port 2004.

In Fig. 17, in order to simplify the design and facilitate the manufacture, the battery pick-and-place device 20 can include a main supporting rack 207, on which both the battery replacement port 203 and the battery storage port 204 are arranged. At the same time, the main supporting rack 207 also has a lifting channel 2070, that is, a space area formed by four columns of the main supporting rack 207, the battery lifting mechanism 202 is arranged on the main supporting rack 207, and the bearing table 200 and the transfer mechanism 201 are both arranged in the lifting channel 2070, and can be driven by the battery lifting mechanism 202 to move vertically along the lifting channel 2070.

In this embodiment, the battery storage port 204 and the battery replacement port 203 can be disposed adjacent to each other, as shown in Fig. 17, the main supporting rack 207 of the battery pick-and-place device 20 may be a cuboid frame structure, and one battery storage port 204 is arranged at each side adjacent to the battery replacement port 203, which can reduce the moving distance of the battery module 93 and save the travel time. Of course, in this embodiment, when the battery storage capacity is large, the battery storage port 204 can also be arranged at the side opposite to the battery replacement port 203. Although the battery storage port 204 is far away from the battery replacement port 203, the space around the battery pick-and-place device 20 can be fully utilized. When the main supporting rack 207 of the battery pick-and-place device 20 adopts another structure, such as a hexagonal prism structure, the number of battery storage ports 204 and even battery replacement ports 203 may be larger.

In addition, each battery storage port 204 can be provided with a plurality of charging bases 211 distributed in the vertical direction, so as to save the footprint. The structure of the charging base bracket 210 can be designed according to the position of the battery replacement port 203, the number of charging bases 211 and the arrangement number in the vertical direction, and the charging base bracket 210 can be an integrated structure or may be divided into several independent structures, and a part of the charging bases 211 can be fixed respectively.

As shown in Fig. 19, the charging base 211 may include a charging table 2110, a charging base coarse positioning module 2111, a charging base fine positioning module 2112 and a connector module 2113. The charging base coarse positioning module 2111 and the charging base fine positioning module 2112 are both arranged on the charging table 2110.

In order to support the battery module 93, as shown in Fig. 19, the charging table 2110 has a receiving surface 2110a, and the charging base coarse positioning module 2111 includes charging base coarse positioning columns 2111a, which protrude from the receiving surface 2110a and correspond to the positions of some positioning holes 931 on the battery module 93. In this embodiment, these positioning holes 931 corresponding to the charging base coarse positioning columns 2111a can be called charging base coarse positioning holes. The charging base fine positioning module 2112 in this embodiment includes a charging base fine positioning column 2112a and a charging base fine positioning power unit. These charging base fine positioning columns 2112a correspond to other positioning holes 931 on the battery module 93. In this embodiment, these positioning holes 931 corresponding to the charging base fine positioning columns 2112a can be called charging base fine positioning holes. It should be noted that, like the coarse positioning holes and fine positioning holes, the charging base coarse positioning holes and the charging base fine positioning holes in this embodiment are only used to distinguish different corresponding relationships, but there are no limitations in their structures, shapes and sizes and the like. The charging base fine positioning columns 2112a can be driven by the charging base fine positioning power unit to extend into these positioning holes 931. The charging base fine positioning power unit can be set as a hydraulic ejector rod or an electric telescopic rod or the like.

Since the positioning holes 931 corresponding to the fixing pins of the bearing table 200 will always be occupied before the battery module 93 is removed from the bearing table 200, the positioning holes 931 corresponding to the charging base coarse positioning column 2111a and the charging base fine positioning columns 2112a should be different from the positioning holes 931 corresponding to the fixing pins of the bearing table 200. Furthermore, the positioning holes 931 corresponding to the charging base coarse positioning column 2111a and the charging base fine positioning column 2112a may be completely identical to, partially identical to or completely different from the positioning holes 931 corresponding to the coarse positioning column 1210 and the fine positioning column 1220.

When the battery module 93 is transferred to the charging table 2110 by the bearing table 200, the charging base coarse positioning column 2111a can move to extend into the corresponding positioning hole 931, thus realizing the coarse positioning of the charging base 211 and the battery module 93. Compared with the size of the positioning hole 931, the charging base coarse positioning column 2111a is much thinner, so the annular gap formed between the charging base coarse positioning column 2111a and the positioning hole 931 is wider. The purpose is to enable the charging base coarse positioning column 2111a to move to smoothly extend into the positioning hole 931 to complete coarse positioning even when the position difference between these two sides is large.

After the charging base coarse positioning column 2111a is moved to extend into the positioning hole 931, the charging base fine positioning power unit is turned on to move the charging base fine positioning column 2112a to extend into the corresponding positioning hole 931. Compared with the charging base coarse positioning column 2111a, the annular gap formed between the charging base fine positioning column 2112a and the positioning hole 931 is much smaller in width, and the positioning hole 931 can be substantially filled. Therefore, the charging base fine positioning column 2112a and the positioning hole 931 can be mated very well, when the charging base fine positioning column 2112a is successfully moved to extend into the positioning hole 931, the fine positioning of the battery module 93 and the charging base 211 can be realized.

Similarly, no matter whether it is coarse positioning or fine positioning, there may be a large deviation between the positions of the positioning holes 931 on the battery module 93 and the positions of the charging base coarse positioning column 2111a or the charging base fine positioning column 2112a. In order to enable the charging base coarse positioning column 2111a and the charging base fine positioning column 2112a is still moved to smoothly extend into the positioning holes 931 even when there is a certain deviation between them and move the battery module 93 to realize the positioning function, the heads of the charging base coarse positioning column 2111a and the charging base fine positioning column 2112a can be provided with guide surfaces, and the guide surfaces may be an inclined surface or an arc surface.

As described above, during the process of positioning the battery module 93 with the cooperation of the charging base coarse positioning column 2111a, the charging base fine positioning column 2112a and the positioning hole 931, the battery module 93 will move. At this time, if there is a relatively large friction force between the charging table 2110 and the battery module 93, the moving effect of the battery module 93 will be affected or even it may be worn out.

In order to avoid the above problems, in this embodiment, as shown in Fig. 19, charging base ball unit 2114 is provided which protrude from the surface of the receiving surface 2110a. When the battery module 93 is placed on the charging table 2110, the battery module 93 can be in a rolling engagement with the charging base ball unit 2114 to avoid excessive friction and reduce wear.

In order to improve the coarse positioning efficiency and coarse positioning accuracy, as shown in Fig. 19, the charging base 211 of the embodiment of the present disclosure may include a plurality of charging base coarse positioning modules 2111, which are preferably distributed along a diagonal line of the battery module 93, and the farther the distance, the higher the positioning accuracy. At the same time, in order to improve the fine positioning efficiency and fine positioning accuracy, the charging base 211 of the embodiment of the present disclosure may also include a plurality of fine positioning modules 122, and a plurality of charging base coarse positioning modules 2111 are distributed along the other diagonal line of the battery module 93, the above two settings can be used independently or cooperatively.

After the fine positioning of the battery module 93 relative to the charging base 211 is realized through the interaction of the charging base coarse positioning column 2111a, the charging base fine positioning column 2112a and the positioning holes 931, the conditions for electrically conducting and charging the battery module 93 with the connector module 2113 are met.

In order to complete the electrical conduction operation between the connector module 2113 and the battery module 93, in this embodiment, the connector module 2113 can be provided with a connector 2113a and a connector power unit. The connector power unit can be set as a telescopic rod or other power mechanism such as a mechanical arm, as long as it can drive the connector 2113a to complete the electrical conduction operation with the corresponding electrical socket on the battery module 93. In practical applications, the shape of the connector 2113a corresponds to the electrical socket on the battery module 93, such as one is a socket and the other a plug, which will not be described here.

In order to improve the automation efficiency, in this embodiment, the charging table 2110 is also provided with a charging base battery module detection sensor 2115, which is configured to detect whether the battery module 93 has been placed on the charging table 2110. The charging base battery module detection sensor 2115 used in this embodiment can be a microswitch, when the battery module 93 is placed on the charging table 2110, the microswitch can be activated to start the fine positioning and electrical conduction operation. Of course, the charging base battery module detection sensor 2115 can also be set as other inductive switches such as photoelectric sensors, which can determine whether the battery module 93 has been placed on the charging table.

In order to facilitate the transfer of the battery module 93 between the bearing table 200 and the charging base 211, in this embodiment, the charging table 2110 can be arranged in a U-shaped structure as shown in Fig. 19, and the charging base fine positioning column 2112a and the connector 2113a are both located above the charging table 2110 and face the hollow area of the U-shaped structure. At this time, the protruding direction of the charging base fine positioning column 2112a is opposite to that of the charging base coarse positioning column 2111a, that is, protruding downward. The charging base fine positioning power unit drives the charging base fine positioning column 2112a to move in the vertical direction.

In this way, a certain gap can be formed between the charging table 2110, the charging base fine positioning column 2112a and the connector 2113a. When the depleted battery module 93 is to be transferred from the bearing table 200 to the charging base 211, the bearing table 200 can be driven by the transfer mechanism 201 to extend the battery module 93 through the above gap and place the battery module 93 between the charging table 2110, the charging base fine positioning column 2112a and the connector 2113a, then, the height is reduced by the battery lifting mechanism 202, so that the battery module 93 is supported by the charging table 2110, and the bearing table 200 can pass through the hollow area of the U-shaped structure to complete the transfer between the battery module 93 and the charging base 211. It should be noted that the charging table 2110 in this embodiment can also adopt other structures that can allow the bearing table 200 to pass through from below, which will not be described in detail here.

When the battery module 93 completes the transfer, it also completes the coarse positioning synchronously, then, the charging base fine positioning power unit of the charging base fine positioning module 2112 drives the charging base fine positioning column 2112a to descend and extend into the corresponding positioning hole 931 to complete the fine positioning. Finally, the connector power unit drives the connector 2113a to electrically conduct with the battery module 93.

Similarly, when the fully charged battery module 93 needs to be taken out from the charging base 211, only the reverse operation is needed. First, the charging base fine positioning column 2112a and the connector 2113a are separated from the battery module 93, then the bearing table 200 is moved to a position below the battery module 93 and then raised upwards, and during the lifting process, the bearing table 200 can lift the battery module 93 until it is separated from the charging table 2110 and the charging base coarse positioning module 2111.

In this embodiment, the orientation of the connector 2113a may be the same as or different from the protruding direction of the charging base fine positioning column 2112a. When the protruding direction of the charging base fine positioning column 2112a is opposite to that of the charging base coarse positioning column 2111a, that is, it protrudes downward, and the orientation of the connector 2113a can be the same as that of the charging base fine positioning column 2112a, the connector power unit also can drive the connector 2113a to move vertically, that is, the connector 2113a and the charging base fine positioning column 2112a move in the same direction at this time.

In this embodiment, in order to fix the charging base fine positioning module 2112 and the connector module 2113, the charging base 211 may further include a supporting rack 2116, which protrudes upward from the bottom of the U-shaped structure, and both the charging base fine positioning module 2112 and the connector module 2113 may be arranged on the supporting rack 2116.

From the foregoing analysis, it can be seen that in different operation processes, the movement directions of the connector 2113a and the charging base fine positioning column 2112a are the same, therefore, in order to save space and improve efficiency, in this embodiment, the mounting table 2117 can be used to fix the charging base fine positioning column 2112a and the connector 2113a at the same time, and the charging base fine positioning power unit and the connector power unit can be integrated into an integrated power unit 2118. As shown in Fig. 19, the integrated power unit 2118 is fixedly arranged on the supporting rack 2116, and the mounting table 2117 can move vertically under the drive of the integrated power unit 2118, so that the charging base fine positioning column 2112a and the connector 2113a can move together, and the fine positioning and electrical conduction operations can be completed synchronously.

The battery module 93 may catch fire or even explode due to current overload, overheating and other problems during charging. At this time, if the fire is not suppressed in time, it may spread to other battery modules, causing serious consequences. Therefore, once the above-mentioned problems occur, it is necessary to be able to move the malfunctioned battery module 93 away from other battery modules 93 as soon as possible and carry out firefighting treatment.

Therefore, in this embodiment, as shown in Fig. 1, Fig. 17 and Fig. 20, the battery replacement station may further include a firefighting device 3, and the battery pick-and-place device 20 also has a fire exhaust port 205, and the firefighting device 3 faces the fire exhaust port 205. In this embodiment, the fire exhaust port 205 can be arranged opposite to the battery replacement port 203, and at this time, the battery replacement device 1, the battery compartment system 2 and the firefighting device 3 can be arranged in sequence.

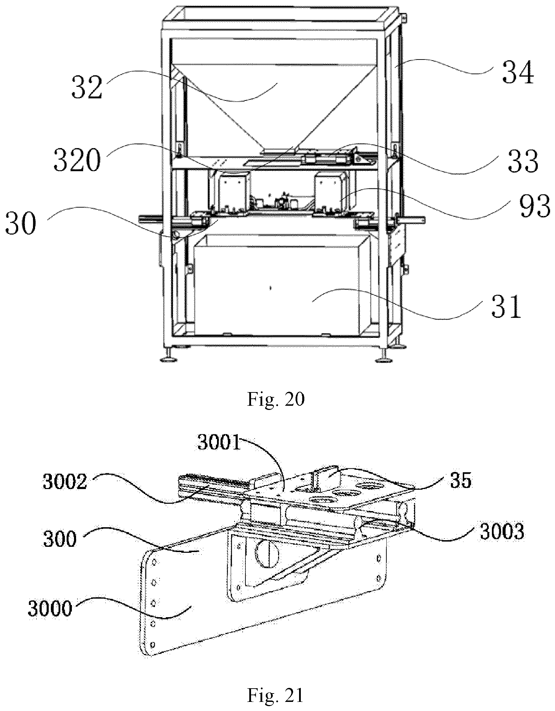

In this embodiment, as shown in Fig. 20, the firefighting device 3 includes a battery module receiving mechanism 30, a firefighting box 31, a firefighting material containing box 32 and a discharge valve 33. Wherein, the battery module receiving mechanism 30 is configured to receive the battery module 93 that needs firefighting protection, and can transport the battery module 93 into the firefighting box 31. The firefighting material containing box 32 is configured to contain firefighting materials such as sand. And the firefighting material containing box 32 has a discharge port 320, which needs to face the firefighting box 31, and the discharge valve 33 is arranged on the discharge port 320. When the battery module 93 in the firefighting box 31 needs firefighting operations, the discharge valve 33 is opened, so that the firefighting materials stored in the firefighting material containing box 32 can enter the firefighting box 31, thereby realizing firefighting protection. In this embodiment, there may also be a firefighting bracket 34 as shown in Fig. 20, and all the above-mentioned equipment can be fixed on the firefighting bracket 34.

In this embodiment, the firefighting box 31 can be arranged below the battery module receiving mechanism 30, and at this time, the battery module receiving mechanism 30 can transport the battery module 93 to the firefighting box 31 by dropping. As shown in Fig. 20, when the battery module 93 is placed on the battery module receiving mechanism 30, the battery module receiving mechanism 30 can remove the receiving force according to preset steps, so that the battery module 93 is dropped.

In this embodiment, the battery module 93 can be transferred to the battery module receiving mechanism 30 through the battery pick-and-place device 20, the principle of the transfer is the same as the transfer of the battery module 93 from the bearing table 200 to the charging base 211, which are both realized by moving in the vertical direction, and will not be repeated here.

In this embodiment, as shown in Fig. 20 and Fig. 21, the battery module receiving mechanism 30 may have two telescopic supporting modules 300 arranged opposite to each other. Normally, the telescopic supporting module 300 can hold the battery module 93 only when it is in a extended posture, and the battery module 93 will fall when it is in a retracted posture. Normally, the above scheme can be realized when the extension directions of the two telescopic supporting modules 300 are opposite. For some battery modules with a large hollowed-out area in the middle, it is possible that the extension directions of the telescopic supporting modules 300 deviate from each other to achieve the above solution.

As shown in Fig. 21, the telescopic supporting module 300 can include a fixing part 3000, a supporting part 3001 and a telescopic power unit 3002, and the telescopic supporting module 300 can be fixed on the firefighting bracket 34 or other components through the fixing part 3000. Meanwhile, the telescopic power unit 3002 is fixed on the fixing part 3000. The telescopic power unit 3002 is configured to drive the supporting part 3001 to complete the telescopic action, the telescopic power unit 3002 can be set as a telescopic arm or a telescopic rod, as long as it can achieve two states of an extended state and a retracted state along the horizontal direction.

In order to make the supporting part 3001 extend and retract smoothly, the telescopic supporting module 300 can also be provided with a telescopic guiding rail 3003, through which the supporting part 3001 and the fixing part 3000 are connected, and the supporting part 3001 can be guided by the telescopic guiding rail 3003 during the telescopic process.

In addition to the way of using the telescopic supporting module 300 mentioned above, the battery module receiving mechanism 30 can also be provided in the form of fire-resistant conveyor belt, etc., as long as it can receive the battery module 93 and transport it to the firefighting box 31.

In this embodiment, the firefighting material containing box 32, the discharge valve 33, the battery module receiving mechanism 30 and the firefighting box 31 can be arranged in sequence from top to bottom. In this way, both the transfer of the battery module 93 to the firefighting box 31 and the transfer of the firefighting materials to the firefighting box 31 can be realized by gravity without any need of setting other power.

In order to detect the improvement of the automation degree of the firefighting device, the firefighting device 3 in this embodiment may further include a detector 35, which can detect whether the battery module receiving mechanism 30 receives the battery module 93. The detector 35 can be a thermal sensor or another type of detector such as a microswitch, as long as it can detect whether the battery module 93 is present on the battery module receiving mechanism 30.

When the detector 35 detects that the battery module receiving mechanism 30 receives the battery module 93, it can send a detection signal to the central processor. After receiving the signal, the central processor can send an instruction to the battery module receiving mechanism 30 to control the battery module receiving mechanism 30 to transfer the battery module 93 into the firefighting box 31. After that, the discharge valve 33 is controlled to open to release the firefighting materials in the firefighting material containing box 32, and the danger of the battery module 93 in the firefighting box 31 is eliminated, so that the firefighting operation is completed.

To sum up, the battery replacement station suitable for an AGV provided by the embodiment of the present disclosure has many advantages such as saving battery exchange time, improving the working efficiency of the AGV, high battery exchange speed, high precision, high degree of automation and so on.

Another embodiment of the present disclosure also provides a battery replacement method for an AGV, which can be implemented by the battery replacement station of the above-mentioned AGV or other equipment.

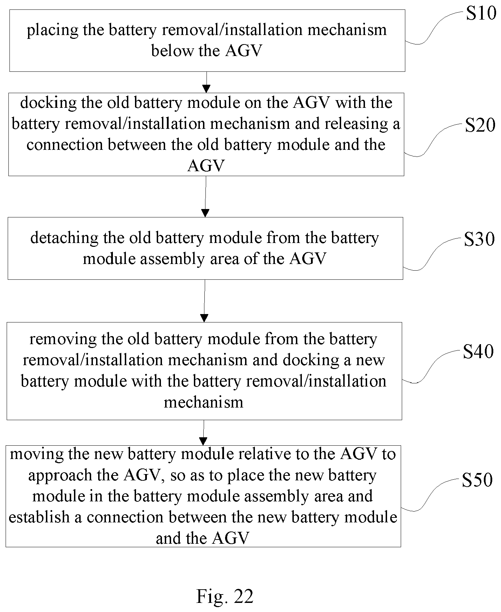

Specifically, as shown in Fig. 22, the battery replacement method for an AGV includes the following steps:
S10, placing the battery removal/installation mechanism below the AGV;
S20, docking the old battery module on the AGV with the battery removal/installation mechanism and releasing a connection between the old battery module and the AGV;
S30, detaching the old battery module from the battery module assembly area of the AGV;
S40, removing the old battery module from the battery removal/installation mechanism and docking a new battery module with the battery removal/installation mechanism;
S50, moving the new battery module relative to the AGV to approach the AGV, so as to place the new battery module in the battery module assembly area and establish a connection between the new battery module and the AGV.

Wherein, the battery module assembly area can be understood as an area of AGV where battery modules are installed, for example, the battery module assembly area is the inner area of the subframe 91.

Through the above five steps, the original battery module with power shortage on the AGV can be removed, and the new battery module fully charged can be replaced into AGV, thus completing the whole replacement process of battery module. This battery replacement method can save a lot of time compared with the method involving waiting for charging. It should be noted that in the above steps S10 to S50, except for the case where the implementation of a certain step depends on the result of another step, a strict sequence might not exist between other steps (for example, step S10 and step S20), depending on the structure of the adopted equipment and the control program. Any two or more of these steps may be executed at the same time, or when one step reaches a certain stage, another step starts to be executed, and the later executed step may also end prior to the earlier executed step, as long as all five steps are finally executed so that the battery module of the AGV can be updated.

Next, each step is explained separately.

Step S10 is a preparation step for replacing the battery module on the AGV, wherein the battery removal/installation mechanism can be the battery removal/installation mechanism 12 in the above-mentioned battery replacement station, or other mechanisms for removing and installing batteries.

If the battery removal/installation mechanism is already located under the bearing equipment of the AGV (such as the lifting rack 10 in the above-mentioned battery replacement station) initially, then this step can be realized naturally only by moving the AGV onto the bearing equipment by moving it on its own or assisted by other equipment.

However, if the battery removal/installation mechanism is not located under the bearing equipment of the AGV initially, but on the side of it, then after moving the AGV to the bearing equipment, the AGV is just located in the initial position, and then it is necessary to lift the AGV upward from the initial position by a certain height to enable the battery removal/installation mechanism to move horizontally to a position below the AGV. After the AGV is raised, the battery removal/installation mechanism should be moved horizontally to a position below the AGV. For the above-mentioned battery replacement station, the lifting process of the AGV can be realized by driving the lifting rack 10 by means of the lifting-rack lifting mechanism 11, and the battery removal/installation mechanism 12 itself is also provided with a corresponding walking module 128 for horizontal movement. The process of horizontal movement of the battery removal/installation mechanism can start after the AGV stops lifting, after the AGV starts to lift for a period of time, or at the same time as the lifting process of the AGV. Furthermore, the process of horizontal movement of the battery removal/installation mechanism can end before or after the AGV stops, or both processes can end at the same time.

The AGV usually needs to be moved from other positions to a position above the battery removal/installation mechanism, and for the above-mentioned battery replacement station or other similar equipment, the AGV also needs to be driven by the lifting rack 10 to move up and down, therefore, the overall horizontal position of the AGV also has a certain influence on the smooth progress of step S20. Improving the overall position certainty of the AGV is also helpful to improve the success rate of step S20, so in the process of step S10, the AGV can be horizontally positioned synchronously.

In this embodiment, horizontally positioning the AGV can also be divided into two stages. In the first stage, the AGV is positioned in the first horizontal direction a perpendicular to the wheel axis by positioning the wheels of the AGV. In the second stage, the AGV is positioned in the second horizontal direction b along the wheel axis, and in order to avoid a failure in the positioning of the first stage, it is necessary to keep the position of the AGV in the first horizontal direction a unchanged during the positioning process of the AGV in the second horizontal direction b. The whole AGV can be horizontally positioned through the above two stages.

For the first stage, the positioning groove can be configured to position the AGV, and the specific process can be as follows: rolling the wheels of the AGV into a positioning groove extending along the second horizontal direction b, and clamping the wheels in the positioning groove under the action of gravity to position the AGV in the first horizontal direction a. The related structure of the positioning groove can refer to the battery replacement station in the above embodiment.

When the second stage is performed, the AGV can always keep the wheels in the positioning groove during the movement along the second horizontal direction b, so as to keep the position of the AGV in the first horizontal direction. Since the positioning groove extends along the second horizontal direction b, even if the AGV moves relative to the positioning groove in the process of moving along the second horizontal direction b, it can be ensured that the positioning groove can always restrain the position of the wheels and the whole AGV in the first horizontal direction.

In a more preferable solution, AGV can make the wheels drive the positioning groove to move together along the second horizontal direction b through friction in the process of moving along the second horizontal direction b. In this way, when the second stage is executed, the positioning groove and the wheels can be kept relatively stationary, so that higher positioning accuracy can be obtained. The above scheme can be implemented by the battery replacement station in the above embodiment, or can also be implemented by other structures or equipment different from the corresponding structures described in the battery replacement station.

In order to improve the automation efficiency and positioning accuracy, the state of AGV can be detected synchronously during the first stage, and the positioning of AGV in the second horizontal direction b along the wheel axis is started after it is detected that the positioning of the AGV in the first horizontal direction a has completed. There are many ways to determine whether the positioning of the AGV in the first horizontal direction a has completed, such as detecting whether the position of a certain marker on the AGV is within a limited range, if yes, it is considered that the positioning in the first horizontal direction has completed, or detecting whether the time when the AGV is in a stationary state exceeds a limited threshold, and if yes, it is considered that the positioning in the first horizontal direction has completed, and so on.

In this embodiment, combined with the positioning characteristics of the positioning groove, a relatively simple determination mode is provided, that is, detecting whether there are AGV wheels in the positioning groove. When it is detected that there are wheels in the positioning groove, it can be considered that the positioning in the first horizontal direction has completed. The related implementation structure has been clarified in the battery replacement station in the above embodiment, and a wheel detection sensor 1010f may be arranged in the first positioning module 1010 of the positioning mechanism 101, which will not be described in detail here.

In the second stage of this embodiment, the AGV can be positioned in the second horizontal direction b along the wheel axis according to the obtained position difference between the AGV and the reference mark in the second direction. The reference mark may be in various forms, such as a score, a two-dimensional code, outline of a specified structure, etc., which is not limited in this embodiment.

Furthermore, when the AGV is positioned along the second horizontal direction b, it is inevitable to apply a force along the second horizontal direction b on the AGV to move it. If the force is applied to the AGV only from one side, when the force is stopped, the AGV may continue to move forward for a certain distance under the action of inertia, resulting in a reduction in the positioning accuracy. To avoid this problem, in this embodiment, in the process of positioning the AGV in the second horizontal direction b, forces can be applied on both sides of the AGV along the second horizontal direction b at the same time, so that the AGV can be pushed to the positioning position in the clamped state. This method can effectively control the moving distance of AGV due to inertia, thus improving the positioning accuracy. In the above-mentioned embodiment of the battery replacement station, the above-mentioned functions can be realized by the horizontal pushing assembly 1011a of the second positioning module 1011, and the related structures and principles have been described in detail in this embodiment, and will not be repeated here.

The purpose of step S20 is to release a connection between the old battery module on the AGV and the main body of the AGV. In step S10, there is usually no direct contact between the whole AGV and the battery removal/installation mechanism 12, but there is a certain distance between them. Therefore, in this step, if the battery removal/installation mechanism is to operate the old battery module, it is necessary to dock the old battery module with the battery removal/installation mechanism.

One of the ways to dock the old battery module with the battery removal/installation mechanism is to move the battery removal/installation mechanism upward to make it close to AGV, and finally realize the docking of the two. The other way, on the contrary, is to move the AGV as a whole downward to a position where it is docked with the battery removal/installation mechanism. In addition, they both can move in the same direction at the same time, or even move in the same direction and approach at different rates, and finally realize docking. For the battery replacement station in the above embodiment, the second mode is adopted, that is, the lifting rack 10 and the AGV are moved downward as a whole by the lifting-rack lifting mechanism 11 in the battery exchange device 1 and docked with the battery removal/installation mechanism 12.

For the battery removal/installation mechanism, if you want to release the connection between the old battery module and AGV smoothly and quickly, it is usually necessary for them to maintain high positioning accuracy. Therefore, in the process of docking the old battery module with the battery removal/installation mechanism, the old battery module can also be horizontally positioned. The positioning process can be started before, during or even after docking, and can be completed before, when or after docking is completed. For the above-mentioned battery replacement station, the positioning process can usually be arranged to start during the docking process and end after the docking is completed.

Specifically, in this embodiment, the process of horizontally positioning the battery module can be divided into two stages, the first stage is the rough positioning of the battery module of the AGV in the horizontal direction, that is, the positioning with lower accuracy and larger error. The second stage is the fine positioning of the battery module of the AGV in the horizontal direction, that is, the positioning with higher accuracy and smaller error.

For the first stage, in this embodiment, the battery module of the AGV can be roughly positioned in the horizontal direction by moving the coarse positioning column to extend into the coarse positioning hole of the battery module from below. At the same time, for the second stage, in this embodiment, the battery module of AGV can be accurately positioned in the horizontal direction by moving the fine positioning column to extend into the fine positioning hole of the battery module from below. In addition, the width of the annular gap formed by the fine positioning column and the fine positioning hole is smaller than that formed by the coarse positioning column and the coarse positioning hole. That is, using the size of the annular gap as the basis of accuracy, the larger the annular gap, the lower the accuracy, otherwise, the smaller the annular gap, the higher the accuracy.

According to the structure of the battery removal/installation mechanism 12 of the above-mentioned battery replacement station, the process of moving the coarse positioning column 1210 to extend into the coarse positioning hole of the battery module from below can be completed synchronously during the process of the battery module 93 moving to the abutting surface 1200 of the abutting table 120 of the battery removal/installation mechanism 12 located below it, and the battery module 93 is in an abutting state with the abutting surface 1200 when the coarse positioning in the horizontal direction is completed.

The process of moving the fine positioning column 1220 to extend into the fine positioning hole of the battery module 93 from below can specifically adopt the method of moving the fine positioning column 1220 from below the abutting surface 1200 to protrude from the abutting surface 1200 and extend into the fine positioning hole of the battery module 93, so as to accurately position the battery module of the AGV in the horizontal direction. The specific positioning component structure and related positioning principle have been explained in the above-mentioned battery replacement station embodiment, and will not be repeated here.

When the horizontal positioning of the battery module has completed or substantially completed, the battery removal/installation mechanism can begin to release the connection between the battery module and the AGV. Between the battery module and the main body of the AGV, a locking module 930, such as that described in the embodiment of the above-mentioned battery replacement station, will be arranged to form a connection with the lock catch 910 of the subframe 91 of the AGV. Therefore, releasing the connection between battery module and AGV is actually releasing the connection between locking module 930 and lock catch 910 to unlock the locking module 930. For the AGV provided in this embodiment, the battery module of the AGV can be unlocked by the unlocking module, for the structure of the unlocking module, please refer to the related introduction of the above-mentioned battery replacement station, the unlocking module 123 has an unlocking ejector rod 1230, and the locking module 930 can be unlocked during the process that the unlocking ejector rod 1230 of the unlocking module 123 moves in a direction from below the abutting surface 1200 to protrude from the abutting surface 1200. The related unlocking structure and principle have been explained in detail in the embodiment of the above-mentioned battery replacement station, and will not be repeated here.

For one battery module 93, it may be necessary to arrange multiple locking modules 930 in different orientations. Due to the large area of the bottom surface of the battery module 93, if it is made of non-durable materials such as plastics, which is easy to deform during use, and the deformed bottom surface may cause the relative position between the locking module 930 and the unlocking ejector rod 1230 to change, so that the locking module 930 cannot be unlocked even if part of the unlocking ejector rod 1230 is extended.

In order to avoid or improve the above problems, in this embodiment, when the battery module 93 moves relative to and approaches the abutting surface 1200 of the abutting table 120 located below it in the vertical direction, the battery module 93 will press the abutting table 120 downward and deform the elastic jacking module 126 connected with the abutting table 120 elastically. This process will stop after detecting that the abutting table 120 is pressed to a predetermined position, that is, the relative movement between the battery module 93 and the abutting table 120 will stop. Through this elastic pressing, the abutting surface 1200 can be in close contact with the bottom surface of the battery module 93, thus ensuring the relative position accuracy between the locking module 930 and the unlocking ejector rod 1230.

Although the connection between the old battery module and the AGV was released in step S20, the old battery module is still in the battery module assembly area of the AGV (for example, the inner area of the subframe 91), so it is difficult to transfer the old battery module directly due to the limitation of the spatial position of both sides. Therefore, it is necessary to perform step S30 to separate the old battery module from the battery module assembly area of the AGV.

During the execution of step S30, since the old battery module has been docked with the battery removal/installation mechanism below in step S20, the battery removal/installation mechanism is usually vertically away from the bearing equipment of the main body of AGV. Since the old battery module is docked with the battery removal/installation mechanism, both can remain relatively stationary, while the AGV is supported by the bearing equipment, and both remain relatively stationary, so the separation between the old battery module and the battery module assembly area of the AGV can be realized. Similarly, the separation of the AGV from the old battery module can be that one of them does not move, the other moves away in the vertical direction, or both of them move away from each other at the same time, or even both of them move in the same direction at different rates and thus away from each other. For the above-mentioned battery replacement station, it usually uses the cooperation of the lifting-rack lifting mechanism 11 and the lifting rack 10 to move the AGV upward until the old battery module is separated from the battery module assembly area of the AGV.

In some removal process of AGV, probably due to the dimensional accuracy problem between the AGV itself and the battery module, even though the locking of the locking module has been released, temporary fixing structures may be formed at other places where the fixing structures should not be formed due to interference, extrusion, and the like. However, due to the existence of these fixing structures, even if the battery removal/installation mechanism and its bearing table are vertically away from the bearing equipment of AGV and the whole AGV, the battery module may still be fixed with the AGV without separation.

At this time, in order to remedy by the automation equipment, the following steps may be included in step S30:
moving the abutting table and the AGV away from each other in the vertical direction, and detecting whether there is a battery module on the abutting table; when it is detected that a battery module already exists on the abutting table, finishing step S30; when it is detected that there is no battery module on the abutting table, perform the following steps:
moving the battery module relative to the abutting surface of the abutting table located below it along the vertical direction and abutting them again;
hooking the battery module by the pulling hook;
moving the abutting table and AGV away from each other in the vertical direction again.

In the process of moving away from each other again, since the battery module has been hooked by the pulling hook and cannot move with the AGV together, the aforementioned temporary fixing structure will be destroyed in the process of moving away from each other, so that the battery module and the AGV can be separated smoothly. In the embodiment of the battery replacement station described above, the process of detecting whether a battery module 93 exists on the abutting table 120 can be realized by the battery module detection sensor 124. The pulling hook 1250 is provided in the battery removal/installation mechanism 12, but in other devices, the pulling hook may also be provided on other structures or devices that do not move with the AGV.

After the AGV is in a state where it can be transferred or transported smoothly, step S40 can be started to remove the old battery module from the battery removal/installation mechanism and dock the new battery module with the battery removal/installation mechanism. This process can be done manually or by using the above-mentioned battery replacement station. After the docking of the new battery module with the battery removal/installation mechanism is completed, step S50 can be executed to place the new battery module in the battery module assembly area and establish a connection with AGV to complete the entire process of battery replacement.

In order to improve the automation efficiency, it is possible to detect whether there is again a battery module that exists on the abutting table during the execution of step S40, and then to execute step S50 when it is detected that there is again a battery module that exists on the abutting table. There are many ways to determine whether there is again a battery module that exists on the abutting table, such as using a counter or counting software to cooperate with the battery module detection sensor 124, etc.

Since there is a long distance between the battery removal/installation mechanism and the AGV in step S30, after the new battery module is docked with the battery removal/installation mechanism in step S40, there is still a long distance between the new battery module and the AGV, and the new battery module cannot be directly assembled. Therefore, in step S50, the new battery module and the AGV need to be moved relatively close to each other, and the distance between them needs to be shortened to place the new battery module in the battery module assembly area. This approach process can be realized by moving the AGV downward as a whole, with the downward movement of the AGV, the new battery module can gradually enter the battery module assembly area of the AGV. The way to establish a connection between the new battery module and the AGV can make the locking module re-locked by the provided mechanism, and the style and locking principle of the mechanism can be adjusted correspondingly according to the different locking modules and their matching structures.

For example, if the unlocking and locking operations of the locking module are exactly the same, the unlocking module 123 can be used as both unlocking and locking mechanism. The first extension of the unlocking ejector rod 1230 unlocks the locking module, and the connection between the battery module and the AGV is released, the second extension of the unlocking ejector rod 1230 relocks the locking module, and the connection between the battery module and the AGV is established. For another example, if the unlocking and locking operations of the locking module are completely opposite, the locking action can be implemented by setting a mechanism opposite to the control action of the unlocking module 123. However, for the matching structure of the locking module 930 and the lock catch 910 provided in the above embodiment, there is a faster locking method, that is, the locking module 930 and the lock catch 910 can be automatically locked while the battery module 93 moves into the battery module assembly area, and no other redundant steps are required.

Because the various systems of the AGV may need to receive, send, store and recall multiple instructions or other information all the time under working conditions, once the AGV is powered off, these functions will be lost, even the information stored in it may be lost. Therefore, the various systems of the AGV usually need to be powered on at all times, even when changing batteries. Under normal circumstances, the power of the AGV is provided by the battery module on it, and in the above four steps S20 to S50, especially from the time when the old battery module is about to release its connection with the AGV to the time when the new battery module establish a connection between the new battery module and the AGV, the AGV may not be connected to the battery module, so the power of the battery module cannot be used. Therefore, in order to ensure that the AGV is not powered off during the execution of the above four steps, this embodiment can always keep the AGV in the pre-charging state during the execution of the above four steps S20 to S50. The pre-charging state is to temporarily supply power to AGV through an external temporary connection.

In this embodiment, the pre-charging line may have completed the communication with the AGV before step S20 is performed. Specifically, the pre-charging line can complete the communication with AGV before step S10 is executed, and then step S10 is executed. Alternatively, the pre-charging line can complete the communication with the AGV during the execution of step S10. For example, in the above-mentioned embodiment of the battery replacement station, the pre-charging line can be performed synchronously in the process of horizontally positioning the AGV. Of course, in other embodiments, the pre-charging line may be used before the positioning of the AGV is started or after the positioning of the AGV is completed. Meanwhile, in this embodiment, the AGV can be disconnected from the pre-charging line after the completion of step S50. The connection structure between the pre-charging line and AGV can refer to the related structure of the pre-charging mechanism 106 of the above-mentioned battery replacement station, and will not be described here again. In addition, the pre-charging line can also complete the connection with the AGV after the end of step S 10 and before the start of step S20.

For the embodiment where there is a step of lifting the AGV upwards from the initial position and moving the battery removal/installation mechanism horizontally to a position below the AGV, after the completion of step S50, the new battery module can be further separated from the battery removal/installation mechanism, then the battery removal/installation mechanism can be horizontally moved out of the position below the AGV and the AGV can be lowered down to the initial position, so that the equipment can return to the original state. It is not only beneficial for the AGV to leave from the initial position, but also beneficial for the next AGV to enter. This process can also be implemented by the above-mentioned battery replacement station, and the related embodiments have been explained in the above-mentioned embodiments.

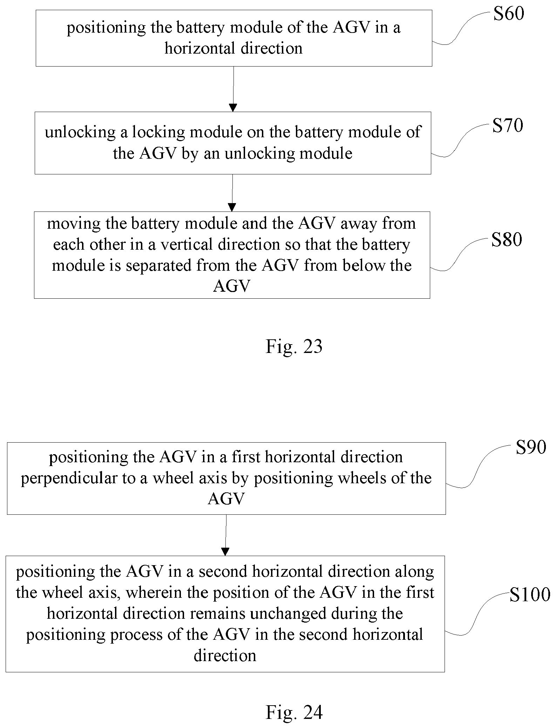

As shown in Fig. 23, the battery removal method for an AGV provided by the embodiment of the present disclosure includes the following steps S60- S80:
S60, positioning the battery module of the AGV in a horizontal direction;
S70, unlocking a locking module on the battery module of the AGV by an unlocking module;
S80, moving the battery module and the AGV away from each other in a vertical direction so that the battery module is separated from the AGV from below the AGV.

As shown in Fig. 24, the positioning method for an AGV provided by the embodiment of the present disclosure includes the following steps S90 and S100:
S90, positioning the AGV in a first horizontal direction perpendicular to a wheel axis by positioning wheels of the AGV;
S100, positioning the AGV in a second horizontal direction along the wheel axis, wherein the position of the AGV in the first horizontal direction remains unchanged during the positioning process of the AGV in the second horizontal direction.

To sum up, the battery replacement method for an AGV provided by the embodiment of the present disclosure has many advantages, such as saving battery exchange time, improving the working efficiency of the AGV, high battery exchange speed, high precision, high degree of automation and so on.

The above embodiments of the present disclosure mainly describe the differences among the various embodiments. The different optimization features of the various embodiments can be combined to form better embodiments as long as they are not contradictory, which are not repeated here in consideration of the conciseness of the text.

The above descriptions are only embodiments of the present disclosure, and are not intended to limit the present disclosure. Various modifications and variations of the present disclosure will occur to those skilled in the art. Any modification, equivalent replacement, improvement, etc. made within the spirit and principle of the present disclosure should be included within the scope of the claims of the present disclosure.

## Claims

1. A battery removal/installation mechanism for an AGV, comprising an abutting table, a coarse positioning module, a fine positioning module and an unlocking module, wherein the coarse positioning module, the fine positioning module and the unlocking module are all arranged on the abutting table,
the abutting table is provided with an abutting surface, the coarse positioning module comprises a coarse positioning column corresponding to a position of a coarse positioning hole on a battery module of the AGV, and the coarse positioning column protrudes from the abutting surface, and can extend into the coarse positioning hole when the abutting surface abuts against the battery module of the AGV;
the fine positioning module comprises a fine positioning power unit and a fine positioning column corresponding to a position of a fine positioning hole on the battery module of the AGV, wherein the fine positioning column can be driven by the fine positioning power unit to protrude from the abutting surface or retract below the abutting surface, and can extend into the fine positioning hole when the fine positioning column protrudes from the abutting surface, and a width of an annular gap formed by the fine positioning column and the fine positioning hole is smaller than that formed by the coarse positioning column and the coarse positioning hole;
the unlocking module comprises an unlocking power unit and an unlocking ejector rod corresponding to a position of a locking module on the battery module of the AGV, the unlocking ejector rod can be driven by the unlocking power unit to protrude from the abutting surface or retract below the abutting surface, and can unlock the locking module when the unlocking ejector rod protrudes from the abutting surface.

2. The battery removal/installation mechanism for an AGV according to claim 1,
comprising a plurality of coarse positioning modules, which are distributed along one diagonal line of the battery module of the AGV;
and/or
comprising a plurality of fine positioning modules, which are distributed along the other diagonal line of the battery module of the AGV.

3. The battery removal/installation mechanism for an AGV according to claim 1, wherein, the abutting table is further provided with a ball unit, which is protrudingly arranged on the abutting surface.

4. The battery removal/installation mechanism for an AGV according to claim 1, wherein the battery removal/installation mechanism further comprises a battery module detection sensor, which is arranged on the abutting table and configured for detecting whether there exists a battery module of the AGV on the abutting table.

5. The battery removal/installation mechanism for an AGV according to claim 1, wherein the battery removal/installation mechanism further comprises a pulling module, which comprises a pulling hook protruding from the abutting surface and a pulling hook power unit for driving the pulling hook to rotate and hooking the battery module of the AGV.

6. The battery removal/installation mechanism for an AGV according to any one of claims 1 to 5, wherein the battery removal/installation mechanism further comprises elastic jacking modules, and the number of abutting tables, the number of unlocking modules and the number of elastic jacking modules are the same as the number of locking modules on the battery module of the AGV, each of the abutting tables is provided with one of the unlocking modules and each of the abutting tables is supported by a different elastic jacking module of the elastic jacking modules respectively.

7. The battery removal/installation mechanism for an AGV according to claim 6, wherein the battery removal/installation mechanism further comprises a jacking sensor for detecting whether at least one of the abutting tables is pressed to a predetermined position.

8. The battery removal/installation mechanism for an AGV according to claim 6, wherein the battery removal/installation mechanism further comprises a walking module, which is connected with the abutting table and configured to drive the abutting table to move horizontally to a position below the battery module of the AGV.

9. The battery removal/installation mechanism for an AGV according to claim 8, wherein the battery removal/installation mechanism comprises a plurality of walking modules, each of which drives a part of the abutting table to move horizontally.

10. The battery removal/installation mechanism for an AGV according to claim 9, wherein the battery removal/installation mechanism comprises two walking modules which move relative to each other.

11. A battery removal method for an AGV, comprising following steps:
positioning a battery module of the AGV in a horizontal direction;
unlocking a locking module on the battery module of the AGV by an unlocking module;
moving the battery module and the AGV away from each other in a vertical direction so that the battery module is separated from the AGV from below the AGV.

12. The battery removal method for an AGV according to claim 11, wherein the step of positioning the battery module of the AGV in the horizontal direction comprises:
roughly positioning the battery module of the AGV in the horizontal direction;
precisely positioning the battery module of the AGV in the horizontal direction.

13. The battery removal method for an AGV according to claim 12, wherein,
the step of roughly positioning the battery module of the AGV in the horizontal direction comprises: moving a coarse positioning column to extend into a coarse positioning hole of the battery module from below to roughly position the battery module of the AGV in the horizontal direction;
the step of precisely positioning the battery module of the AGV in the horizontal direction comprises: moving a fine positioning column to extend into a fine positioning hole of the battery module from below to accurately position the battery module of the AGV in the horizontal direction;
a width of an annular gap formed by the fine positioning column and the fine positioning hole is smaller than that formed by the coarse positioning column and the coarse positioning hole.

14. The battery removal method for an AGV according to claim 13, wherein,
the step of moving the coarse positioning column to extend into the coarse positioning hole of the battery module from below to roughly position the battery module of the AGV in the horizontal direction comprises:
in a process that the battery module moves relative to and approaches an abutting surface of an abutting table located below it in a vertical direction, moving the coarse positioning column to extend into the coarse positioning hole of the battery module from below, roughly positioning the battery module of the AGV in the horizontal direction, wherein the battery module abuts against the abutting surface when the rough positioning in the horizontal direction is completed;
the step of moving the fine positioning column to extend into the fine positioning hole of the battery module from below to accurately position the battery module of the AGV in the horizontal direction comprises:
moving the fine positioning column from below the abutting surface to protrude from the abutting surface and extend into the fine positioning hole of the battery module to accurately position the battery module of the AGV in the horizontal direction.

15. The battery removal method for an AGV according to claim 14, wherein in the process that the battery module moves relative to and approaches the abutting surface of the abutting table located below it in the vertical direction, the battery module will press the abutting table downward and elastically deform an elastic jacking module connected with the abutting table, and stop a relative movement between the battery module and the abutting table after detecting that the abutting table is pressed to a predetermined position.

16. The battery removal method for an AGV according to claim 14 or 15, wherein in the process that the battery module moves relative to and approaches the abutting surface of the abutting table located below it in the vertical direction, the battery module moves towards the abutting surface of the abutting table located below it.

17. The battery removal method for an AGV according to claim 14 or 15, wherein the step of moving the battery module and the AGV away from each other in the vertical direction so that the battery module is separated from the AGV from below the AGV comprises:
moving the AGV upward in the vertical direction away from the abutting table, so that the battery module stays on the abutting table and separates from the AGV.

18. The battery removal method for an AGV according to claim 14 or 15, wherein the step of moving the battery module and the AGV away from each other in the vertical direction so that the battery module is separated from the AGV from below the AGV comprises:
moving the abutting table and the AGV away from each other in the vertical direction, and detecting whether there is a battery module on the abutting table; stopping removing the battery module when it is detected that there is a battery module on the abutting table; and performing following steps when it is detected that there is no battery module on the abutting table:
moving the battery module along the vertical direction relative to the abutting surface of the abutting table located below it and abutting them against each other again;
hooking the battery module by a pulling hook;
moving the abutting table and the AGV away from each other in the vertical direction again.

19. The battery removal method for an AGV according to claim 14 or 15, wherein the step of unlocking the locking module on the battery module of the AGV by the unlocking module comprises:
unlocking the locking module in a process that an unlocking ejector rod of the unlocking module moves from below the abutting surface to protrude from the abutting surface.
